# EUROPEAN PATENT APPLICATION

(11) **EP 1 988 331 A1**
(43) Date of publication of application: **05.11.2008**
(21) Application number: 07714895.5
(22) Date of filing: 19.02.2007
(51) Int. Cl.: F21V 8/00, G02B 6/00, G02F 1/13357, G09F 13/18, F21Y 101/02

(54) **SURFACE EMITTING DEVICE**

(30) Priority: 22.02.2006 JP 2006045044; 22.02.2006 JP 2006045145; 26.04.2006 JP 2006122094
(71) Applicant: TAKIRON CO., LTD., Osaka-shi, Osaka 541-0052 (JP)
(72) Inventor: KAWASHIMA, Yoshiaki, Osaka-shi, Osaka 541-0052 (JP); OMURA, Yutaka, Osaka-shi, Osaka 541-0052 (JP)
(74) Representative: Bates, Philip Ian
(86) International application number: PCT/JP2007/053447
(87) International publication number: WO 2007/097437

(57) **Abstract**

The present invention provides a thin, low-power consumption, lightweight, and inexpensive surface light emitting apparatus using LEDs in conjunction with a light conducting member having a plurality of light conducting rods. More specifically, the surface light emitting apparatus of the invention comprises: a light conducting member constructed from a plurality of light conducting rods and having an end face and a light-emitting face; a light source for emitting light into the light conducting member through the end face; and light deflecting means for causing the light introduced through the end face of the light conducting member to emerge from the light-emitting face of the light conducting member.

## Description

### FIELD OF THE INVENTION

The present invention relates to a surface light emitting apparatus, and more specifically to a surface light emitting apparatus that uses a light conducting member having a plurality of light conducting rods.

### BACKGROUND OF THE INVENTION

A surface light emitting apparatus used for backlighting a liquid crystal display or the like achieves surface illumination by diffusing light from a line light source, such as a neon tube, evenly behind the display through the use of a flat light conducting plate (refer, for example, to patent document 1).

It is also known to construct a surface illumination apparatus by arranging a plurality of relatively inexpensive LEDs at equally spaced intervals on a substrate and to use it for directly illuminating a billboard or the like from the back side thereof.

Patent document 1: Japanese Unexamined Patent Publication No. H11-237629

### SUMMARY OF THE INVENTION

However, it is not known to construct a surface light emitting apparatus for illuminating a display or an interior of a building by using a light conducting member having a plurality of light conducting rods.

Accordingly, it is an object of the present invention to provide a surface light emitting apparatus that uses a light conducting member having a plurality of light conducting rods.

It is another object of the present invention to provide a thin, low-power consumption, lightweight, and inexpensive surface light emitting apparatus using LEDs in conjunction with a light conducting member having a plurality of light conducting rods.

It is still another object of the present invention to provide a surface light emitting apparatus that emits light of pale, soft, and ecologic color by using LEDs in conjunction with a light conducting member having a plurality of light conducting rods.

It is yet another object of the present invention to provide a surface light emitting apparatus that uses a light conducting member for causing light introduced from an edge to emerge from a light-emitting surface and a hollow multi-cell structure having a plurality of hollow cells.

It is a further object of the present invention to provide a thin, low-power consumption, lightweight, and inexpensive surface light emitting apparatus using LEDs in conjunction with a light conducting member for causing light introduced from an edge to emerge from a light-emitting surface and a hollow multi-cell structure having a plurality of hollow cells.

It is a still further object of the present invention to provide a surface light emitting apparatus that emits light of pale, soft, and ecologic color by using LEDs in conjunction with a light conducting member for causing light introduced from an edge to emerge from a light-emitting surface and a hollow multi-cell structure having a plurality of hollow cells.

It is a yet further object of the present invention to provide a surface light emitting apparatus that is constructed by stacking one on top of another a plurality of light conducting members each for causing light introduced from an edge to emerge from a light-emitting surface.

A surface light emitting apparatus according to the present invention comprises: a stacked structure constructed from a plurality of light conducting rods; a light source for emitting light into the stacked structure from an end face thereof; and light deflecting means for causing the light introduced through the end face of the stacked structure to emerge from a light-emitting surface of the stacked structure.

A surface light emitting apparatus according to the present invention comprises: a light conducting member constructed from a plurality of light conducting rods and having an end face and a light-emitting face; a light source for emitting light into the light conducting member through the end face; and light deflecting means for causing the light introduced through the end face of the light conducting member to emerge from the light-emitting face of the light conducting member.

Preferably, in the surface light emitting apparatus according to the present invention, the light deflecting means is formed by surface roughening of the light conducting rods which are formed from a resin.

Preferably, in the surface light emitting apparatus according to the present invention, the light deflecting means is a random projection/depression pattern formed on the light-emitting face of each of the light conducting rods.

Preferably, in the surface light emitting apparatus according to the present invention, the light deflecting means is a dot pattern or a pattern of V-shaped or U-shaped grooves formed on the light-emitting face of each of the light conducting rods.

Preferably, in the surface light emitting apparatus according to the present invention, the light source is constructed from a plurality of LEDs, and the plurality of LEDs are arranged one for each of the light conducting rods.

Preferably, the surface light emitting apparatus according to the present invention further comprises a plurality of reflectors for coupling the plurality of LEDs to the plurality of light conducting rods, respectively. The reflectors serve to efficiently introduce the light from the respective LEDs into the respective light conducting rods.

Preferably, the surface light emitting apparatus according to the present invention further comprises a control unit for causing the stacked structure to display a stripe pattern by controlling the plurality of LEDs to emit differently colored lights, i.e., the apparatus is constructed to display a stripe pattern over the entire area of the stacked structure by causing the light conducting rods to illuminate in different colors.

A surface light emitting apparatus according to the present invention comprises: a light conducting member having an end face and a light-emitting face; a light source for emitting light into the light conducting member through the end face; light deflecting means for causing the light introduced from the light source to emerge from the light-emitting face of the light conducting member; and a hollow multi-cell structure constructed from a plurality of hollow cells for allowing the light emerging from the light-emitting face to pass therethrough.

Preferably, in the surface light emitting apparatus according to the present invention, the light-emitting face is oriented at substantially right angles to the end face.

Preferably, in the surface light emitting apparatus according to the present invention, the light deflecting means is formed by roughening of the light-emitting face of the light conducting member which is formed from a resin.

Preferably, in the surface light emitting apparatus according to the present invention, the light deflecting means is a random projection/depression pattern formed on the light-emitting face.

Preferably, in the surface light emitting apparatus according to the present invention, the light deflecting means is a dot pattern or a pattern of V-shaped or U-shaped grooves formed on the light-emitting face.

Preferably, in the surface light emitting apparatus according to the present invention, the light conducting member and the hollow multi-cell structure are formed in an integral fashion.

Preferably, in the surface light emitting apparatus according to the present invention, the light conducting member is constructed from a plurality of light conducting rods.

Preferably, in the surface light emitting apparatus according to the present invention, the light source is constructed from a plurality of LEDs, and the plurality of LEDs are arranged one for each of the light conducting rods.

A surface light emitting apparatus according to the present invention comprises: a light source: a light conducting member having an end face, through which light emitted from the light source is introduced, and a light-emitting face having a light deflecting function for causing the light introduced through the end face to emerge from the light-emitting face; and a hollow light conducting member constructed from a plurality of hollow cells for allowing the light emerging from the light-emitting face to pass therethrough.

Preferably, the surface light emitting apparatus according to the present invention further comprises a plurality of reflectors for coupling the plurality of LEDs to the plurality of light conducting rods, respectively. The reflectors serve to efficiently introduce the light from the respective LEDs into the respective light conducting rods.

Preferably, the surface light emitting apparatus according to the present invention further comprises a control unit for causing the light conducting member to display a stripe pattern by controlling the plurality of LEDs to emit differently colored lights, i.e., the apparatus is constructed to display a stripe pattern over the entire area of the light conducting member by causing the light conducting rods to illuminate in different colors.

A surface light emitting apparatus according to the present invention comprises: a first light conducting member having a first end face and a first light-emitting face; a second light conducting member having a second end face and a second light-emitting face; a first light source for emitting light into the first light conducting member through the first end face; a second light source for emitting light into the second light conducting member through the second end face; first light deflecting means for causing the light introduced from the first light source to emerge from the first light-emitting face of the first light conducting member; and second light deflecting means for causing the light introduced from the second light source to emerge from the second light-emitting face of the second light conducting member, and wherein: the first light conducting member and the second light conducting member are arranged one on top of the other.

Preferably, in the surface light emitting apparatus according to the present invention, the first light conducting member is constructed from first light conducting rods, the second light conducting member is constructed from second light conducting rods, and the first light conducting rods are oriented so as to extend at substantially right angles to the second light conducting rods.

Preferably, in the surface light emitting apparatus according to the present invention, the first and second light sources are each constructed from a plurality of LEDs, and the plurality of LEDs are arranged one for each of the plurality of first and second light conducting rods.

Preferably, the surface light emitting apparatus according to the present invention further comprises a plurality of reflectors for coupling the plurality of LEDs to the plurality of first and second light conducting rods, respectively.

Preferably, the surface light emitting apparatus according to the present invention further comprises a control unit for controlling the first light source so as to display a stripe pattern on the first light conducting member and the second light source so as to display a stripe pattern on the second light conducting member, thereby displaying as a whole a checkerboard pattern on the surface light emitting apparatus.

Preferably, the surface light emitting apparatus according to the present invention further comprises: a first hollow multi-cell structure constructed from a plurality of hollow cells for allowing the light emerging from the first light-emitting face of the first light conducting member to pass therethrough; and a second hollow multi-cell structure constructed from a plurality of hollow cells for allowing the light emerging from the second light-emitting face of the second light conducting member to pass therethrough.

Preferably, in the surface light emitting apparatus according to the present invention, the first and second light deflecting means are respectively formed by roughening the first and second light-emitting faces of the first and second light conducting members which are formed from a resin.

Preferably, in the surface light emitting apparatus according to the present invention, the first and second light deflecting means are random projection/depression patterns formed on the first and second light-emitting faces, respectively.

Preferably, in the surface light emitting apparatus according to the present invention, the first and second light deflecting means are dot patterns or patterns of V-shaped or U-shaped grooves formed on the first and second light-emitting faces, respectively.

According to the present invention, since surface illumination is produced by the LED light introduced through the end face of the light conducting member, a thin, low-power consumption, lightweight, and inexpensive surface light emitting apparatus can be achieved.

Further, according to the present invention, since the light emerges from the roughened resin surface of the light conducting member, the apparatus can emit light of pale, soft, and ecologic color can be achieved.

Furthermore, according to the present invention, since the light emerging from the roughened resin surface of the light conducting member is introduced into the hollow multi-cell where the light is scattered and/or diffused before emerging outside the apparatus, the apparatus can produce paler and softer light.

According to the present invention, since surface illumination is produced by the LED light introduced through the end face of the light conducting member, a thin, low-power consumption, lightweight, and inexpensive surface light emitting apparatus can be achieved.

Furthermore, according to the present invention, since a plurality of light conducting members are arranged one on top of another, the apparatus can produce a variety of illumination patterns, such as a checkerboard pattern, that have been difficult to achieve with the prior art apparatus.

### BRIEF DESCRIPTION OF THE DRAWINGS

Figure 1 is a front view of a wall-hanging panel-type surface light emitting apparatus according to the present invention as viewed from the light-emitting side thereof;
Figure 2 is a cross-sectional view of the wall-hanging panel-type surface light emitting apparatus shown in Figure 1;
Figure 3 is a diagram schematically showing the configuration of an LED light source unit used in the wall-hanging panel-type surface light emitting apparatus of Figure 1;
Figure 4 is a diagram showing one example of a light conducting rod used in the wall-hanging panel-type surface light emitting apparatus of Figure 1;
Figure 5 is a perspective view showing the relationship between the stacked structure and LED light source unit used in the wall-hanging panel-type surface light emitting apparatus of Figure 1;
Figure 6 is a diagram showing another example of the stacking method for the light conducting rods used in the wall-hanging panel-type surface light emitting apparatus of Figure 1;
Figure 7(a) is a diagram showing still another example of the stacking method for the light conducting rods, as viewed from an end face side thereof, used in the wall-hanging panel-type surface light emitting apparatus of Figure 1, and Figure 7(b) is a diagram showing the same as viewed from the light-emitting side thereof;
Figure 8(a) is a diagram explaining a color pattern produced when a stacked structure 10 is used, and Figure 8(b) is a diagram explaining a color pattern produced when a stacked structure 70 is used;
Figure 9 is a diagram explaining another illumination pattern produced by the stacked structure used in the wall-hanging panel-type surface light emitting apparatus of Figure 1;
Figure 10 is a cross-sectional view of another panel-type surface light emitting apparatus according to the present invention;
Figure 11 is a front view of a wall-hanging panel-type surface light emitting apparatus according to the present invention as viewed from the light-emitting side thereof;
Figure 12 is a cross-sectional view of the wall-hanging panel-type surface light emitting apparatus shown in Figure 11;
Figure 13 is a diagram schematically showing the configuration of the LED light source unit used in the wall-hanging panel-type surface light emitting apparatus of Figure 11;
Figure 14 is a diagram showing one example of a light conducting rod used in the wall-hanging panel-type surface light emitting apparatus of Figure 11;
Figure 15 is a perspective view showing the relationship between the light conducting member, hollow multi-cell structure, and LED light source unit used in the wall-hanging panel-type surface light emitting apparatus of Figure 11;
Figure 16(a) is a diagram showing the relationship between the light conducting member and hollow multi-cell structure used in the wall-hanging panel-type surface light emitting apparatus of Figure 11, Figure 16(b) is a diagram showing another relationship, and Figure 16(c) is a diagram showing still another relationship;
Figure 17 is a diagram explaining an illumination pattern produced by the light conducting member used in the wall-hanging panel-type surface light emitting apparatus of Figure 11;
Figure 18 is a diagram explaining another illumination pattern produced by the light conducting member used in the wall-hanging panel-type surface light emitting apparatus of Figure 11;
Figure 19 is a cross-sectional view of another panel-type surface light emitting apparatus according to the present invention;
Figure 20 is a perspective view showing another example of how the light conducting member and the hollow multi-cell structure are arranged relative to each other;
Figure 21 is a front view of a wall-hanging panel-type surface light emitting apparatus according to the present invention as viewed from the light-emitting side thereof;
Figure 22 is a cross-sectional view of the wall-hanging panel-type surface light emitting apparatus shown in Figure 21;
Figure 23 is a perspective view showing the relationship between the light conducting members and LED light source units used in the wall-hanging panel-type surface light emitting apparatus of Figure 21;
Figure 24 is a diagram schematically showing the configuration of the LED light source unit used in the wall-hanging panel-type surface light emitting apparatus of Figure 21;
Figure 25(a) is a diagram showing one example of a light conducting rod 401 used in the wall-hanging panel-type surface light emitting apparatus of Figure 21, and Figure 25(b) is a diagram showing one example of a light conducting rod 411;
Figure 26 is a diagram for explaining an illumination pattern produced by the light conducting member used in the wall-hanging panel-type surface light emitting apparatus of Figure 21;
Figure 27 is a diagram explaining a checkerboard illumination pattern produced on the wall-hanging panel-type surface light emitting apparatus of Figure 21;
Figure 28 is a diagram showing another surface light emitting apparatus;
Figure 29(a) is a diagram showing a first state of still another surface light emitting apparatus, and Figure 29(b) is a diagram showing a second state;
Figure 30 is a front view of a double-sided panel-type surface light emitting apparatus as viewed from one light-emitting side thereof;
Figure 31 is a cross-sectional view of the wall-hanging panel-type surface light emitting apparatus shown in Figure 30;
Figure 32 is a perspective view showing the relationship between light conducting members, hollow multi-cell structures, and LED light source units;
Figure 33 is a diagram showing an example of how the light conducting member and the hollow multi-cell structure are arranged relative to each other;
Figure 34(a) is a diagram showing another example of how the light conducting member and the hollow multi-cell structure are arranged relative to each other, and Figure 34(b) is a diagram showing still another example of arrangement;
Figure 35 is a front view of another wall-hanging panel-type surface light emitting apparatus as viewed from the light-emitting side thereof;
Figure 36 is a cross-sectional view of the wall-hanging panel-type surface light emitting apparatus shown in Figure 35; and
Figure 37 is a diagram showing the relationship between hollow multi-cell structures and LED light source units in the wall-hanging panel-type surface light emitting apparatus of Figure 36.

### DETAILED DESCRIPTION OF THE PREFERRED EMBODIMENT

A surface light emitting apparatus according to the present invention will be described below with reference to the drawings. However, it should be noted that the present invention is not limited by the description given herein, but embraces the inventions described in the appended claims and their equivalents.

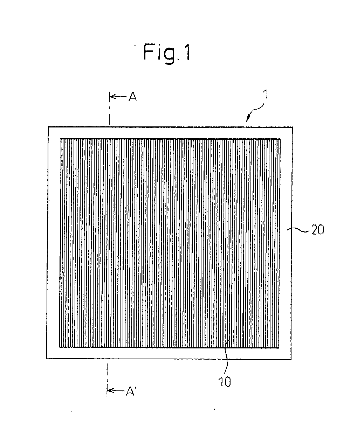

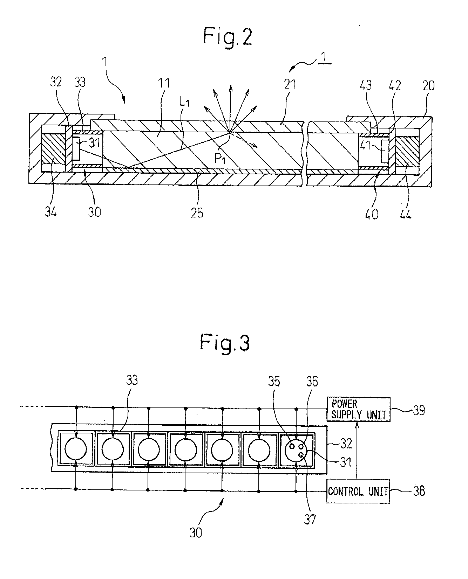

Figure 1 is a front view of a wall-hanging panel-type surface light emitting apparatus 1 as viewed from the light-emitting side thereof when the surface light emitting apparatus according to the present invention is constructed as a wall-hanging panel. Figure 2 is a cross-sectional view taken along line AA' in Figure 1.
In this embodiment, the wall-hanging panel-type surface light emitting apparatus 1 has a size of 500 × 500 mm. However, the wall-hanging panel-type surface light emitting apparatus 1 is not limited to this particular size, but can be constructed in various sizes.

As shown in Figures 1 and 2, the wall-hanging panel-type surface light emitting apparatus 1 comprises a stacked structure 10 as a light conducting member constructed by stacking a plurality of light conducting rods 11, a frame member 20, a first LED light source unit 30, and a second LED light source unit 40. The first and second LED light source units 30 and 40 are disposed in such a manner as to flank the stacked structure 10 from the top and bottom in Figure 1, and are fixed to the inside of the frame member 20. A protective plate 21 formed from an optically transmissive resin is provided on the light-emitting surface side of the stacked structure 10 (on the upper side in the figure). A reflective sheet 25 is provided on the back surface side of the stacked structure 10 (on the lower side in the figure).

Here, the protective plate 21 may be formed from an optically transmissive resin, or the surface light emitting apparatus 1 may not be provided with the protective plate 21. While the reflective sheet 25 serves to efficiently reflect the light of the first and second LED light source units 30 and 40 toward the light-emitting surface, the surface light emitting apparatus 1 need not necessarily be provided with such a reflective sheet. Further, to control the light emerging from the light-emitting surface, a diffusing sheet or a prism sheet may be provided on the stacked structure 10.

In the example of Figures 1 and 2, the LED light source units are mounted along the top and bottom sides of the stacked structure 10, but if the light intensity is sufficient, the LED light source may be mounted only on one side.

Figure 3 is a diagram schematically showing the first LED light source unit 30.

The first LED light source unit 30 comprises a plurality of LEDs 31, a circuit substrate 32, reflectors 33, and an electronic component 34. The plurality of LEDs 31 are arranged at equally spaced intervals on the circuit substrate 32, and each individual LED is covered with its dedicated reflector 33. The interior of each reflector 33 is aluminum-deposited, and the reflector 33 thus functions to efficiently couple the light from the LED 31 into the corresponding light conducting rod 11. The interior of the reflector 33 may be mirror-finished or be coated with a white paint.

Each LED 31 is an LED of the type that contains a red LED element 35, a green LED element 36, and a blue LED element 37 in a single package, and can emit light of any desired color by mixing colored lights from the respective LED elements. Each LED 31 emits light of specified color by being driven by a current supplied from a power supply unit 39 in accordance with the control timing and the color specified by a control unit 38. Alternatively, each LED 31, may be constructed from a single-color LED, for example, a red LED, a green LED, a blue LED, or a white LED. When using single-color LEDs, it is preferable to arrange a plurality of LEDs for each one of the light conducting rods hereinafter described, because a variety of colors can then be produced. For the LEDs, not only the above-described chip type but other types of LED such as an oval type or a shell type can also be used.

The configuration of the second LED light source unit 40 is the same as that of the first LED light source unit 30 described above, and therefore, it will not be described further herein.

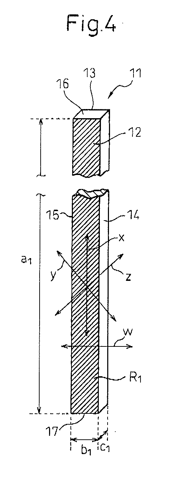

Figure 4 is a diagram showing one example of the light conducting rod 11.

The light conducting rod 11, which measures 450 mm in length (a₁), 12 mm in horizontal width (be), and 5 mm in vertical width (or height) (c₁), is formed from a polycarbonate resin (hereinafter called a PC resin). The light conducting rod 11 may be formed from a PMMA resin, an MS resin, a polyester resin such as PET, a PSt resin, a COP resin, a COC resin, an olefin resin such as a PP resin or a PE resin, a PVC resin, an ionomer resin, glass, etc.

The light conducting rod 11 has a light-emitting face 12, a rear face 13 on the side opposite to the light-emitting face 12, side faces 14 and 15 extending adjacent to the light-emitting face 12, and end faces 16 and 17 each making an angle of approximately 90 degrees relative to the light-emitting face 12 so as to transmit therethrough the light emitted from the corresponding LED light source unit 30. A light deflecting means for causing the light emitted from the LED light source unit 30 and/or the LED light source unit 40 and introduced through the end face 16 and/or the end face 17 to emerge from the light-emitting face 12 is formed on the light-emitting face 12 of the light conducting rod 11. The light deflecting means will be described later.

The rear face 13 and side faces 14 and 15 of the light conducting rod 11 are polished to a smooth and clear finish so that the light introduced into the light conducting rod 11 will be totally reflected by these faces and will not leak out through them. Instead of polishing to a smooth and clear finish, the rear face 13 and side faces 14 and 15 of the light conducting rod 11 may each be provided with a low refractive index layer or a reflective layer. Further, in order to effectively reflect the light toward the light-emitting face 12, the rear face 13 may be mirror-finished or be coated with a high refractive index paint or a high reflectivity paint, or may be provided with a light deflecting means similarly to the light-emitting face 12. The end faces 16 and 17 of the light conducting rod 11 are finished smooth so that the light emitted from the first and second LED light source units 30 and 40 can be readily introduced into the interior of the light conducting rod 11.

The entire surface of the light-emitting face 12 of the light conducting rod 11 is roughened, so that the light introduced through the end face 16 or 17 is scattered by the microscopic projections and depressions formed by the surface roughening and the thus scattered light emerges from the light-emitting face 12.

As one example of the surface roughening, V-shaped grooves R (each measuring 3 µm in depth and 20 µm in width) are formed uniformly (at a pitch of 1 mm) along z direction over the entire surface of the light-emitting face 12 of the light conducting rod 11. The V-shaped grooves function as the light deflecting means (R₁).

The pitch of the V-shaped grooves may be varied between the end and center portions of the light conducting rod 11. In the portion where the pitch of the V-shaped grooves is small, the amount of light scattering is large, and therefore, the amount of emergent light is large. Accordingly, if the pitch in the end portions of the light conducting rod 11 (the portions close to the respective LED light source units) is made large (for example, 50 mm), and the pitch in the center portion of the light conducting rod (the portion farthest from the LED light source units) is made small (for example, 50 µm), control can be performed so that a substantially even light output is produced across the surface area of the light conducting rod 11.

The V-shaped grooves need not necessarily be formed along z direction, but may be formed along x direction, y direction, and/or w direction. Further, each V-shaped groove need not necessarily be formed continuously, but may be formed in a discontinuous manner. For example, the depth of each V-shaped groove is preferably within the range of 3 to 6 µm, and the width is preferably within the range of 20 to 40 µm, while the pitch is preferably within the range of 50 µm to 5 mm. However, the depth, width, and pitch of the V-shaped grooves are not limited to these specific values, but other suitable values can be employed as needed.

For the light deflecting means (R₁), use may be made of other patterns than the V-shaped grooves; for example, U-shaped grooves, a dot pattern (a pattern of dot-like microscopic projections and depressions) engraved or printed by laser, or an array of inverted square pyramid shaped depressions may be used. Further, random projections and depressions, inverted V-shaped projections, or inverted U-shaped projections, formed by chemical, plasma, electron beam, or other etching techniques, may be used as the light deflecting means (R₁). Preferably, the light deflecting means (R₁) is formed over the entire area of the light-emitting face 12, for example, along the x direction, y direction, z direction, and/or w direction shown in Figure 4.

Further, the light deflecting means (R₁) may be formed by adding a diffusing material in the light conducting rod 11. As the diffusing material to be added here, use can be made of inorganic particles of glass, silica, mica, synthetic mica, calcium carbonate, barium sulfate, talc, montmorillonite, kaolin clay, bentonite, hectorite, etc., metal oxide particles of titanium oxide, zinc oxide, tin oxide, alumina, etc., or organic polymer particles of acrylic beads, styrene beads, benzoguanamine, silicone, etc. For example, when the stacked structure 10 is formed from a PC resin, the haze value is 67.3% when 0.05 parts of silicone with an average particle size of 2 µm are added as the diffusing material per 100 parts of the PC resin, 83% when 0.1 parts of such silicone are added, and 93% when 0.5 parts of such silicone are added. The haze value when the diffusing material is added is preferably not lower than 10% but not greater than 99%. If it is lower than 10%, a sufficient light scattering effect cannot be obtained, and if it is greater than 99%, the light transmission characteristics degrade, greatly reducing the amount of emergent light.

The surface roughening of the light-emitting face 12 can be accomplished by cutting using a saw or an automatic cutter (for example, an NC router) or by blasting, surface grinding using a grinder, emboss forming, etc.

In the case of cutting using a saw, the face cut by the saw blade when cutting the light conducting rod from a resin bulk by an automatic disc saw or the like can be directly used as the light-emitting face 12. In this case, the top and bottom end faces 16 and 17 must be polished to a clear finish.

In the case of blasting, particles are applied using a high-speed blasting machine over the surface of the light conducting rod 11 to form random projections and depressions, and the thus formed surface can be used as the light-emitting face 12.

In the case of grinding, a grinder using, for example, a file is used to grind the surface of the light conducting rod 11 so as to shave the surface, and the resulting face can be used as the light-emitting face 12.

In the case of forming the light conducting rod 11 by extrusion, the light-emitting face 12 can be formed by using a mold provided with random projections and depressions or by passing the molded light conducting rod between surface matting rolls before cooling.

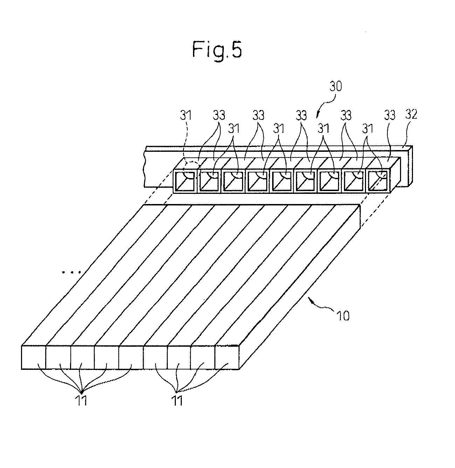

Figure 5 is a perspective view showing the relationship between the stacked structure 10 and the first LED light source unit 30.

The stacked structure 10 that functions as a light conducting member is constructed by stacking a plurality (for example, 45) of light conducting rods 11 with their side faces 14 and 15 contacting each other and their light-emitting faces 12 facing toward the light-emitting side of the surface light emitting apparatus 1. Further, each reflector 33 of the first LED light source unit 30 is formed so that its size exactly matches the size of one end face 16 or 17 of each light conducting rod, and one reflector 33 is provided for each light conducting rod 11, i.e., one LED 31 is provided for each light conducting rod 11.

Preferably, the LEDs 31 are arranged with their light emission centers aligned parallel to the longitudinal direction of the respective light conducting rods 11, and more preferably, the LEDs 31 are arranged so that their light emission centers coincide with the longitudinal center lines of the respective light conducting rods 11.

Though not shown here, the reflectors 43 and the LEDs 41 of the second LED light source unit 40 are arranged on the other end face 16 or 17 side of the light conducting rods 11 in a manner similar to those of the first LED light source unit 30.

Next, a description will be given of how the light is emitted from the surface light emitting apparatus shown in Figure 1.

First, the light emitted from each LED 31 of the first LED light source unit 30 is introduced into the corresponding light conducting rod 11 through one end face 16 or 17 thereof. The light introduced into the light conducting rod 11 propagates toward the LED 41 at the opposite end (for example, see light ray L₁ in Figure 2) while being reflected at the rear face 13 and side faces 14 and 15 of the light conducting rod 11. However, since the light deflecting means (R₁) is provided over the entire area of the light-emitting face 12 of the light conducting rod 11, the light introduced into the light conducting rod 11 strikes the light deflecting means where the light is scattered (for example, see point P₁ in Figure 2). Some of the scattered light emerges from the light-emitting face 12. Some of the scattered light is scattered back into the light conducting rod 11, but such light is again reflected at the rear face 13, side faces 14 and 15, reflective sheet 25, etc. of the light conducting rod 11, and is eventually scattered at the light-emitting face 12 and emerges outside the surface light emitting apparatus 1.

Since the rear face 13 and side faces 14 and 15 of the light conducting rod 11 are all polished to a smooth and clear finish, as earlier described, the light introduced into the light conducting rod 11 either propagates substantially only through the light conducting rod 11 or emerges from the light-emitting face 12 of the light conducting rod 11, and little light is allowed to diffuse into other light conducting rods 11 adjacent to it.

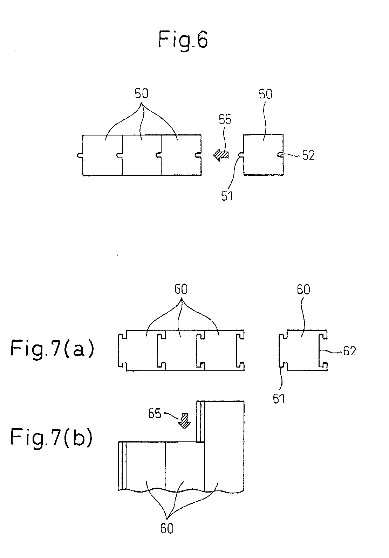

Figure 6 is a diagram showing another example of the stacking method for the light conducting rods.

In the earlier described example (see Figure 5), the light conducting rods 11 were stacked by simply arranging them side by side. On the other hand, in the example shown here, a protrusion 51 is formed on one side face of each of the light conducting rods 50 and a recess 52 is formed in the opposite side face as shown in Figure 6 so that adjacent light conducting rods 50 can be joined together by fitting the protrusion of one light conducting rod into the recess of the other light conducting rod as shown by arrow 55 in the figure. Figure 6 shows an end view of the light conducting rods 50.

This structure facilitates the fabrication of the stacked structure 10 and/or the surface light emitting apparatus 1.

Figure 7 is a diagram showing still another example of the stacking method for the light conducting rods.

In the example shown in Figure 5, the light conducting rods 11 were stacked by arranging them side by side. On the other hand, in the example shown here, a protrusion 61 is formed on one side face of each of the light conducting rods 60 and a recess 62 is formed in the opposite side face as shown in Figure 7(a) so that adjacent light conducting rods 60 can be joined together by fitting the protrusion of one light conducting rod in sliding fashion into the recess of the other light conducting rod as shown by arrow 65 in Figure 7(b). Figure 7(a) shows an end view of the light conducting rods 60, and Figure 7(b) shows the light conducting rods 60 as viewed from the light-emitting side thereof.

This structure not only facilitates the fabrication of the stacked structure 10 and/or the surface light emitting apparatus 1, but also serves to increase the structural strength of the stacked structure because the light conducting rods can be joined together in an integral fashion without having to use an adhesive or the like.

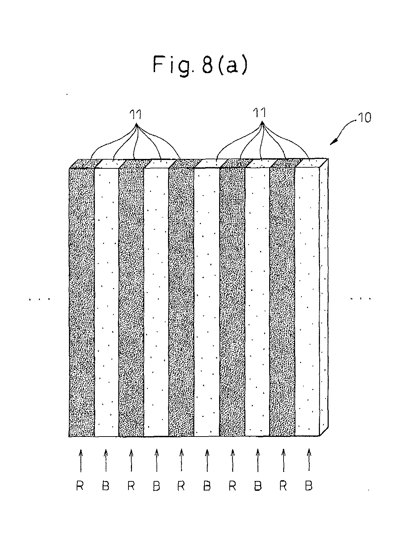

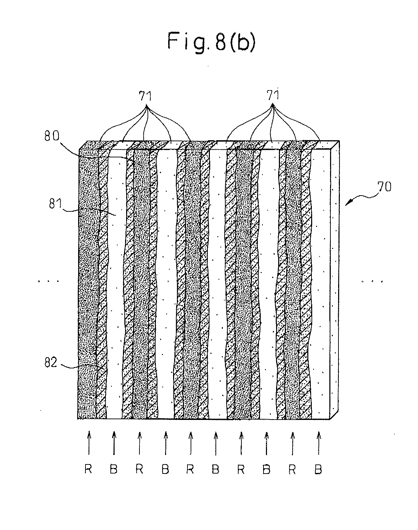

Figure 8 is a diagram explaining how a color pattern can be produced by the stacked structure.

Figure 8(a) shows the case where the stacked structure 10 constructed from the plurality of light conducting rods 11 is used as the light conducting member. As earlier described, since the rear faces 13 and side faces 14 and 15 of the light conducting rods 11 are all polished to a smooth and clear finish, the light introduced into each particular light conducting rod 11 propagates substantially only through that particular light conducting rod 11 and emerges only from the light-emitting face 12 of that particular light conducting rod 11, and the light does not diffuse into other light conducting rods 11 adjacent to it. As a result, a stripe pattern can be displayed on the stacked structure 10 under the control of the control unit 38.

Accordingly, when the LEDs 31 corresponding to the respective light conducting rods 11 emit red and blue colored lights one alternating with the other, as shown in Figure 8(a), the light-emitting faces 12 of the light conducting rods 11 illuminate in red and blue in alternating fashion.

Figure 8(b) shows the case where a stacked structure 70 constructed from a plurality of light conducting rods 71 is used as an alternative example. In the case of the light conducting rods 71 of the alternative example, unlike the case of the light conducting rods 11, the side faces extending adjacent to the light-emitting face are not polished to a smooth and clear finish, i.e., in the case of the light conducting rods 71, the side faces extending adjacent to the light-emitting face are also roughened, just as the light-emitting face is. Accordingly, the red and blue colored lights entering the respective light conducting rods 71 are additively mixed selectively in regions near the side faces of the respectively adjacent light conducting rods 71 (the regions 82), and the resulting magenta colored light emerges from the selective regions of the light emitting faces of the light conducting rods 71. On the other hand, the center regions of the light emitting faces of the respective light conducting rods 71 illuminate in the respective colors (the region 80 in red color and the region 81 in blue color) producing a substantially red/blue stripe pattern.

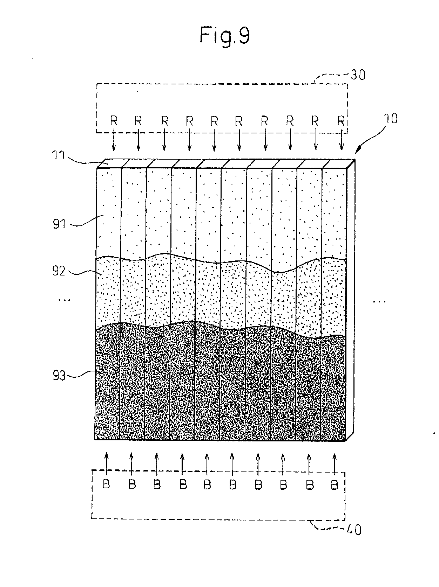

Figure 9 is a diagram explaining another color pattern produced by the stacked structure.

In the example of Figure 9, the first LED light source unit 30 mounted along the upper end of the light conducting rods 11 in the figure is caused to emit red colored light, and the second LED light source unit 40 mounted along the lower end of the light conducting rods 11 in the figure is caused to emit blue colored light, thereby causing the upper region 91 of the stacked structure 10 to illuminate in red and the lower region 93 of the stacked structure 10 to illuminate in blue, while causing the intermediate region 92 of the stacked structure 10 to illuminate in magenta produced by mixing red and blue. The color mixing ratio here can be varied as desired by controlling the light intensities of the first and second LED light source units 30 and 40.

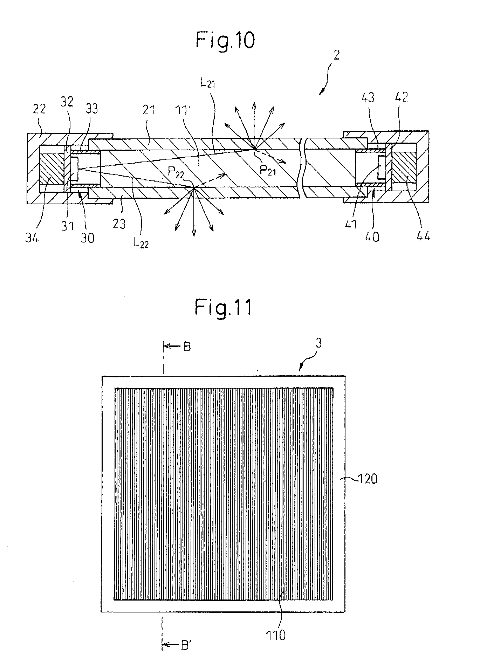

Figure 10 is a cross-sectional view of another panel-type surface light emitting apparatus according to the present invention.

The panel-type surface light emitting apparatus 2 shown in Figure 10 differs from the panel-type surface light emitting apparatus 1 shown in Figure 2 in that the reflective sheet 25 and the bottom of the frame member 20 are replaced by a bottomless frame member 22 and a second protective plate 23. Like the first protective plate 21, the second protective plate 23 is also formed from an optically transmissive resin.

Further, each light conducting rod 11' in the panel-type surface light emitting apparatus 2 is provided with a light deflecting means on the rear face 13 as well as on the light-emitting face 12. The light emitted from each LED 31 of the first LED light source unit 30 is introduced into the corresponding light conducting rod 11' through one end face thereof. The light introduced into the light conducting rod 11' propagates toward the LED 41 at the opposite end (for example, see light rays L₂₁ and L₂₂ in Figure 10). However, since the light deflecting means are provided over the entire areas of the front and rear faces of the light conducting rod 11', the light introduced into the light conducting rod 11' strikes the light deflecting means where the light is scattered (for example, see points P₂₁ and P₂₂ in Figure 10). In this way, the panel-type surface light emitting apparatus 2 is constructed so that it can emit light from both surfaces. In the panel-type surface light emitting apparatus 2, even if the earlier described light conducting rods 11 each having the light deflecting means only on the light-emitting face 12 are used, light can also be made to emerge from the second protective plate 23 by the scattering and reflecting action of the light deflecting means.

As described above, since the surface light emitting apparatus 1 and 2 according to the present invention are constructed to emit light from the roughened resin surfaces of the light conducting rods, the apparatus can emit light of pale, soft, and ecologic color as if the light were being emitted, for example, from within ice.

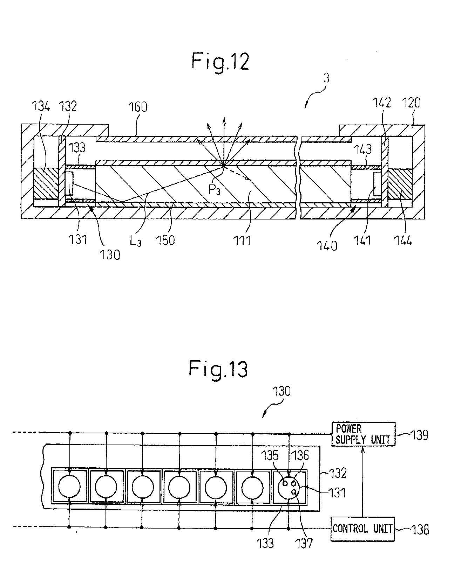

Figure 11 is a front view of a wall-hanging panel-type surface light emitting apparatus 3 as viewed from the light-emitting side thereof when the surface light emitting apparatus according to the present invention is constructed as a wall-hanging panel. Figure 12 is a cross-sectional view taken along line BB' in Figure 11. In this embodiment, the wall-hanging panel-type surface light emitting apparatus 3 has a size of 500 x 500 mm. However, the wall-hanging panel-type surface light emitting apparatus 3 is not limited to this particular size, but can be constructed in various sizes.

As shown in Figures 11 and 12, the wall-hanging panel-type surface light emitting apparatus 3 comprises a light conducting member 110 constructed by stacking a plurality of light conducting rods 111, a frame member 120, a first LED light source unit 130, a second LED light source unit 140, a reflective sheet 150, and a hollow multi-cell structure 160 having a plurality of hollow cells. The first and second LED light source units 130 and 140 are disposed in such a manner as to flank the light conducting member 110 from the top and bottom in Figure 11, and are fixed to the inside of the frame member 120. The hollow multi-cell structure 160 is located on the light-emitting surface side of the light conducting member 110 (on the upper side in Figure 12). The reflective sheet 150 is provided on the back surface side of the light conducting member 110 (on the lower side in Figure 12).

The reflective sheet 150 serves to efficiently reflect the light of the first and second LED light source units 130 and 140 toward the light-emitting surface, but the surface light emitting apparatus 3 need not necessarily be provided with such a reflective sheet. Further, to control the light emerging from the light-emitting surface, a diffusing sheet or a prism sheet may be provided on the hollow multi-cell structure 160.

In the example of Figures 11 and 12, the LED light source units are mounted along the top and bottom sides of the light conducting member 110, but if the light intensity is sufficient, the LED light source may be mounted only on one side.

Figure 13 is a diagram schematically showing the first LED light source unit 130.

The first LED light source unit 130 comprises a plurality of LEDs 131, a circuit substrate 132, reflectors 133, and an electronic component 134. The plurality of LEDs 131 are arranged at equally spaced intervals on the circuit substrate 132, and each individual LED is covered with its dedicated reflector 133. The interior of each reflector 133 is aluminum-deposited, and the reflector 133 thus functions to efficiently couple the light from the LED 131 into the corresponding light conducting rod 111. The interior of the reflector 133 may be mirror-finished or be coated with a white paint.

Each LED 131 contains a red LED element 135, a green LED element 136, and a blue LED element 137 in a single package, and can emit light of any desired color by mixing colored lights from the respective LED elements. Each LED 131 emits light of specified color by being driven by a current supplied from a power supply unit 139 in accordance with the control timing and the color specified by a control unit 138. Alternatively, each LED 131 may be constructed from a single-color LED, for example, a red LED, a green LED, a blue LED, or a white LED.

The configuration of the second LED light source unit 140 is the same as that of the first LED light source unit 130 described above, and therefore, it will not be described further herein.

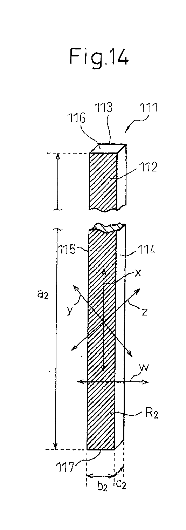

Figure 14 is a diagram showing one example of the light conducting rod 111 as the basic building block of the light conducting member.

In the present embodiment, the light conducting rod 111, which measures 450 mm in length (a₂), 12 mm in horizontal width (b₂), and 5 mm in vertical width (or height) (c₂), is formed from a PC resin.

The light conducting rod 111 has a light-emitting face 112, a rear face 113 on the side opposite to the light-emitting face 112, side faces 114 and 115 extending adjacent to the light-emitting face 112, and end faces 116 and 117 each making an angle of approximately 90 degrees relative to the light-emitting face 112 so as to transmit therethrough the light emitted from the corresponding LED light source unit. A light deflecting means for causing the light emitted from the first LED light source unit 130 and/or the second LED light source unit 140 and introduced through the end face 116 and/or the end face 117 to emerge from the light-emitting face 112 is formed on the light-emitting face 112 of the light conducting rod 111.

The rear face 113 and side faces 114 and 115 of the light conducting rod 111 are polished to a smooth and clear finish so that the light introduced into the light conducting rod 111 will be totally reflected by these faces and will not leak out through them. Instead of polishing to a smooth and clear finish, the rear face 113 and side faces 114 and 115 of the light conducting rod 111 may each be provided with a low refractive index layer or a reflective layer. Further, in order to effectively reflect the light toward the light-emitting face 112, the rear face 113 may be mirror-finished or be coated with a high refractive index paint or a high reflectivity paint, or may be provided with a light deflecting means similarly to the light-emitting face 112. The end faces 116 and 117 of the light conducting rod 111 are finished smooth so that the light emitted from the first and second LED light source units 130 and 140 can be readily introduced into the interior of the light conducting rod 111.

The material of the light conducting rod 111, the details of the light deflecting means (R₂), the surface roughening method for forming the light deflecting means, the diffusing material added in the light conducting rod 111 to form the light deflecting means, etc., are the same as those described in connection with the light conducting rod 11, and will not be described further herein.

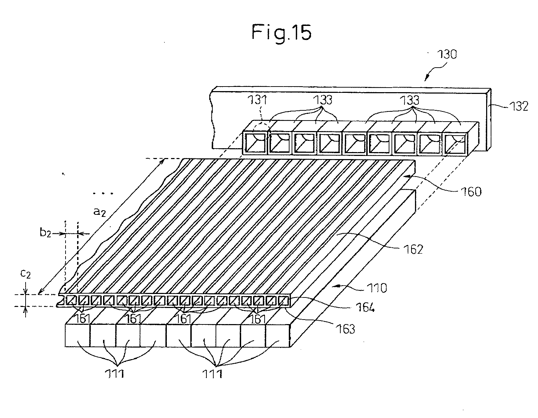

Figure 15 is a perspective view showing the relationship between the light conducting member 110, the hollow multi-cell structure 160, and the first LED light source unit 130.

The light conducting member 110 is constructed by stacking a plurality (for example, 45) of light conducting rods 111 with their side faces 114 and 115 contacting each other and their light-emitting faces 112 facing toward the light-emitting side of the surface light emitting apparatus 3.

The hollow multi-cell structure 160 is constructed by integrally forming a plurality of hollow cells 161 one adjacent to another along the longitudinal direction thereof. More specifically, the structure comprises a top plate 162, a bottom plate 163, and a plurality of ribs 164. Each hollow cell 161 measures 450 mm in length (a₂), 5 mm in horizontal width (b₂), and 5 mm in vertical width (or height) (c₂), and the top plate 162, the bottom plate 163, and the ribs 164 are all formed from a 0.133-mm thick transparent polycarbonate resin. Here, the hollow multi-cell structure 160 may be formed from a PMMA resin, an MS resin, a PC resin, a polyester resin such as PET, a PSt resin, a COP resin, a COC resin, an olefin resin such as a PP resin or a PE resin, a PVC resin, an ionomer resin, glass, etc.

The light conducting member 110 and the hollow multi-cell structure 160 are arranged so that two hollow cells 161 correspond to one light conducting rod 111. Here, the light conducting member 110 and the hollow multi-cell structure 160 may be bonded together by an optical adhesive by arranging them so that two hollow cells 161 correspond to one light conducting rod 111.

Each reflector 133 of the first LED light source unit 130 is formed so that its size exactly matches the size of one end face 116 or 117 of each light conducting rod 111, and one reflector 133 is provided for each light conducting rod 111, i.e., one LED 131 is provided for each light conducting rod 111.

Preferably, the LEDs 131 are arranged with their light emission centers aligned parallel to the longitudinal direction of the respective light conducting rods 111, and more preferably, the LEDs 131 are arranged so that their light emission centers coincide with the longitudinal center lines of the respective light conducting rods 111.

Though not shown here, the reflectors 143 and the LEDs 141 of the second LED light source unit 140 are arranged on the other end face 116 or 117 side of the light conducting rods 111 in a manner similar to those of the first LED light source unit 130.

Next, a description will be given of how the light is emitted from the surface light emitting apparatus 3.

First, the light emitted from each LED 131 of the first LED light source unit 130 is introduced into the corresponding light conducting rod 111 through one end face 116 or 117 thereof. The light introduced into the light conducting rod 111 propagates toward the LED 141 at the opposite end (for example, see light ray L₃ in Figure 12). However, since the light deflecting means (R₂) formed by surface roughening is provided on the light-emitting face 112 of the light conducting rod 111, the light introduced into the light conducting rod 111 strikes the light deflecting means where the light is scattered (for example, see point P₃ in Figure 12). Some of the scattered light emerges from the light-emitting face 112. Some of the scattered light is scattered back into the light conducting rod 111, but such light is again reflected at the rear face 113, side faces 114 and 115, reflective sheet 150, etc. of the light conducting rod 111, and is eventually scattered at the light-emitting face 112 and emerges outside the light conducting rod 111.

Next, the light emerging from the light-emitting face 112 enters the hollow multi-cell structure 160. The light that entered the hollow multi-cell structure 160 is transmitted through the hollow multi-cell structure 160 while being scattered and diffused by the bottom plate 163, the plurality of ribs 164, and the top plate 162, and emerges outside the surface light emitting apparatus 3.

Since the rear face 113 and side faces 114 and 115 of the light conducting rod 111 are all polished to a smooth and clear finish, as earlier described, the light introduced into the light conducting rod 111 either propagates substantially only through the light conducting rod 111 or emerges from the light-emitting face 112 of the light conducting rod 111, and little light is allowed to diffuse into other light conducting rods 111 adjacent to it. However, since the light emerging from each light conducting rod 111 passes through the hollow multi-cell structure 160 before emerging outside the surface light emitting apparatus 3, the light is scattered and diffused by the bottom plate 163, the plurality of ribs 164, and the top plate 162 of the hollow multi-cell structure 160, and thus, the lights emitted from the adjacent light conducting rods 111 are mixed together between the adjacent light conducting rods 111.

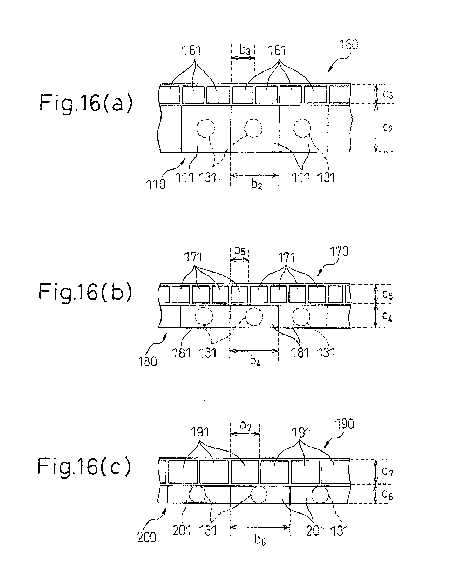

Figure 16 is a diagram for explaining the relationship between the light conducting member and the hollow multi-cell structure.

Figure 16(a) shows the structure of Figure 15 as viewed facing the end faces of the light conducting rods 111. As shown, two cells 161 are arranged for each light conducting rod 111. As earlier described, each light conducting rod 111 measures 10 mm in horizontal width (b₂) and 10 mm in vertical width (c₂), and each hollow cell 161 measures 5 mm in horizontal width (b₃) and 5 mm in vertical width (c₃).

Figure 16(b) shows an example in which an alternative light conducting member 180 and an alternative hollow multi-cell structure 170 are arranged instead of the light conducting member 110 and the hollow multi-cell structure 160, respectively; the structure shown here can be employed for the construction of the surface light emitting apparatus 3. The materials used for the light conducting member 180 and the hollow multi-cell structure 170 and the formation of the light-emitting faces are the same as those for the light conducting member 110 and the hollow multi-cell structure 160 shown in Figure 16(a). Each of the light conducting rods 181 forming the light conducting member 180 measures 10 mm in horizontal width (b₄) and 5 mm in vertical width (c₄), and each light conducting rod 181 has a light-emitting face on the side thereof facing the hollow multi-cell structure 170. Each hollow cell 171 measures 4 mm in horizontal width (b₅) and 4 mm in vertical width (c₅). The positional relationship of the light conducting rods 181 relative to the hollow cells 171 is not considered in this arrangement.

Figure 16(c) shows an example in which a further alternative light conducting member 200 and a further alternative hollow multi-cell structure 190 are arranged instead of the light conducting member 110 and the hollow multi-cell structure 160, respectively; the structure shown here can be employed for the construction of the surface light emitting apparatus 3. The materials used for the light conducting member 200 and the hollow multi-cell structure 190 and the formation of the light-emitting faces are the same as those for the light conducting member 110 and the hollow multi-cell structure 160 shown in Figure 16(a). Each of the light conducting rods 201 forming the light conducting member 200 measures 12 mm in horizontal width (b₆) and 4 mm in vertical width (c₆), and each light conducting rod 201 has a light-emitting face on the side thereof facing the hollow multi-cell structure 190. Each hollow cell 191 measures 6 mm in horizontal width (b₇) and 6 mm in vertical width (c₇). Two hollow cells 191 are arranged for each conducting rod 201.

In Figures 16(a) to 16(c), the mounting position of each LED 131 is shown by dotted lines.

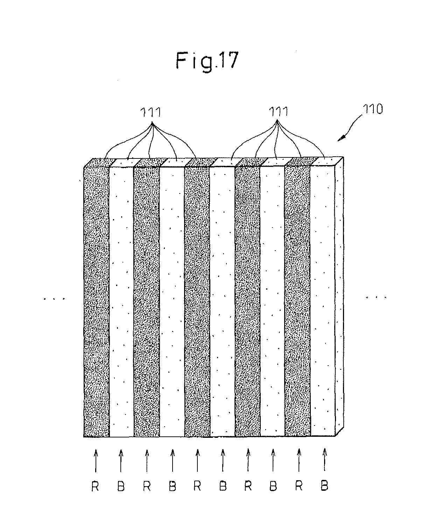

Figure 17 is a diagram for explaining how a color pattern can be produced by the light conducting member.

Figure 17 shows the case where the light conducting member 110 constructed from the plurality of light conducting rods 111 is used. As earlier described, since the rear faces 113 and side faces 114 and 115 of the light conducting rods 111 are all polished to a smooth and clear finish, the light introduced into each particular light conducting rod 111 propagates substantially only through that particular light conducting rod 111 and emerges only from the light-emitting face 112 of that particular light conducting rod 111, and the light does not diffuse into other light conducting rods 111 adjacent to it.

Accordingly, when the LEDs 131 corresponding to the respective light conducting rods 111 emit red and blue colored lights one alternating with the other, as shown in Figure 17, the light-emitting faces 112 of the light conducting rods 111 illuminate in red and blue in alternating fashion, i.e., a stripe pattern can be displayed on the light conducting member 110 under the control of the control unit 138.

The light emerging from the light conducting member 110 is introduced into the hollow multi-cell structure 160. The light introduced into the hollow multi-cell structure 160 is scattered and diffused by the bottom plate 162, the plurality of ribs 164, and the top plate 162 of the hollow multi-cell structure 160. As a result, light emitted from the adjacent light conducting rods 111 are mixed together in the hollow multi-cell structure 160. Further, since the light conducting member 110 emits light from the roughened resin surfaces of the light conducting rods 111, the surface light emitting apparatus can emit light of pale, soft, and ecologic color as if the light were being emitted, for example, from within ice. Furthermore, since the surface light emitting apparatus 3 is constructed so as to cause the light emitted from the light conducting member 110 to emerge through the hollow multi-cell structure 160, the apparatus can emit softer light.

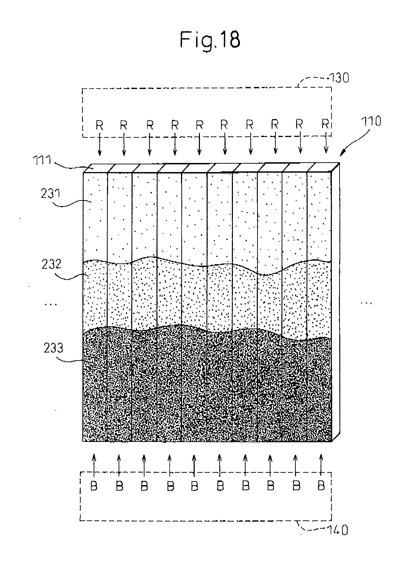

Figure 18 is a diagram explaining another color pattern produced by the light conducting member.

In the example of Figure 18, the first LED light source unit 130 mounted along the upper end of the light conducting rods 111 in the figure is caused to emit red colored light, and the second LED light source unit 140 mounted along the lower end of the light conducting rods 111 in the figure is caused to emit blue colored light, thereby causing the upper region 231 of the light conducting member 110 to illuminate in red and the lower region 233 of the light conducting member 110 to illuminate in blue, while causing the intermediate region 232 of the light conducting member 110 to illuminate in magenta produced by mixing red and blue. The color mixing ratio here can be varied as desired by controlling the light intensities of the first and second LED light source units 130 and 140.

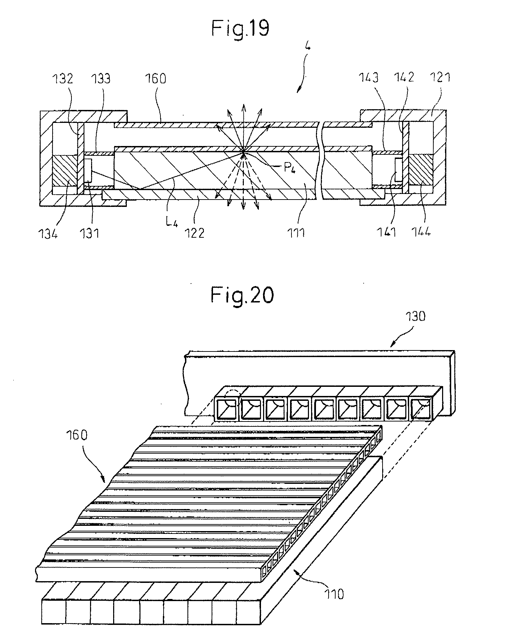

Figure 19 is a cross-sectional view of another panel-type surface light emitting apparatus 4 according to the present invention.

The panel-type surface light emitting apparatus 4 shown in Figure 19 differs from the panel-type surface light emitting apparatus 3 shown in Figure 12 in that the reflective sheet 150 and the bottom of the frame member 120 are replaced by a bottomless frame member 121 and a protective plate 122. The protective plate 122 is formed from an optically transmissive resin.

In the panel-type surface light emitting apparatus 4, light can also be made to emerge from the protective plate 122 by the scattering and reflecting action of the light deflecting means formed on the light-emitting face 112. That is, the apparatus can emit light from both surfaces.

Figure 20 is a diagram showing another example of how the light conducting member and the hollow multi-cell structure are arranged relative to each other.

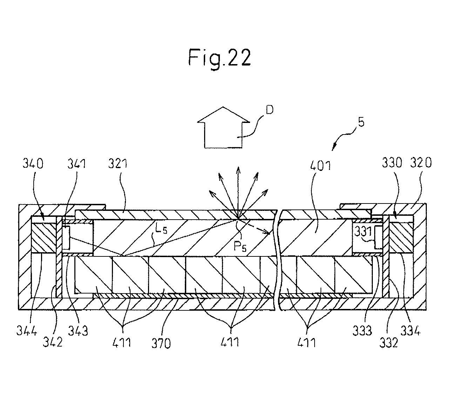

In the example of Figure 15, the light conducting member 110 and the hollow multi-cell structure 160 were arranged with the hollow cells 161 extending in parallel to the light conducting rods 111. In contrast, in the example of Figure 22, the light conducting member 110 and the hollow multi-cell structure 160 are arranged with the hollow cells 161 extending at right angles to the light conducting rods 111. The light conducting member 110 and the hollow multi-cell structure 160 may be arranged by orienting the hollow cells 161 at an arbitrarily determined angle (for example, 45 degrees) relative to the light conducting rods 111. By thus changing the positional relationship between the light conducting member 110 and the hollow multi-cell structure 160, the degree of scattering/reflection of the light emerging from the light conducting rods 111 can be adjusted.

In this way, since the surface light emitting apparatus 3 and 4 according to the present invention are constructed to emit light by causing the light emerging from the roughened resin surfaces of the light conducting rods to further pass through the hollow multi-cell structure, the apparatus can emit light of pale, soft, blurred, and ecologic color.

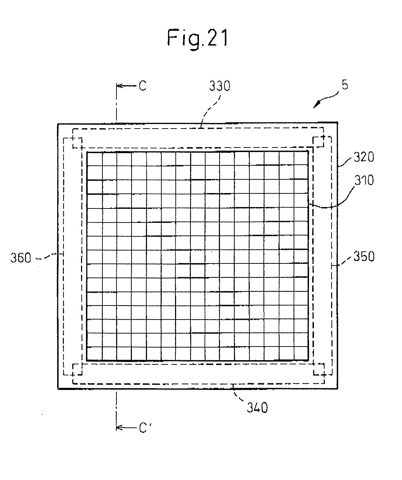

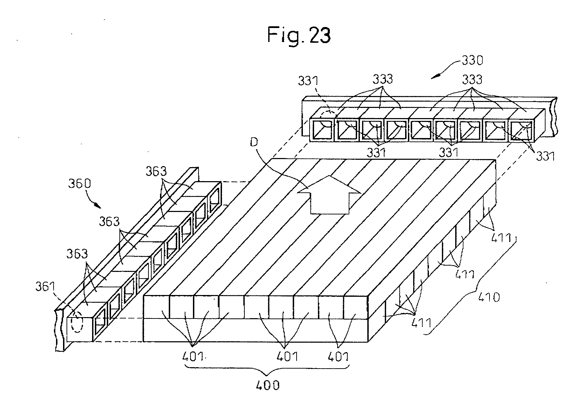

Figure 21 is a front view of a wall-hanging panel-type surface light emitting apparatus 5 as viewed from the light-emitting side thereof when the surface light emitting apparatus according to the present invention is constructed as a wall-hanging panel. Figure 22 is a cross-sectional view taken along line CC' in Figure 21. Further, Figure 23 is a perspective view showing the relationship between a first light conducting member 400, a second light conducting member 410, a first LED light source unit 330, and a fourth LED light source unit 360. In Figures 22 and 23, light emerges in the direction indicated by arrow D.

As shown in Figures 21 to 23, the wall-hanging panel-type surface light emitting apparatus 5 comprises: the first light conducting member 400 constructed from a plurality of light conducting rods 401; the second light conducting member 410 constructed from a plurality of light conducting rods 411; a frame member 320 having an opening 310; the first LED light source unit 330; the second LED light source unit 340; the third LED light source unit 350; and the fourth LED light source unit 360.

The first light conducting member 400 is placed on top of the second light conducting member 410 and on the side that faces the opening, and the plurality of light conducting rods 401 forming the first light conducting member 400 are arranged so as to extend at substantially right angles to the plurality of light conducting rods 411 forming the second light conducting member 410.

The first and second LED light source units 330 and 340 are disposed in such a manner as to flank the light conducting member 400 from the top and bottom in Figure 23, and are fixed to the inside of the frame member 320. On the other hand, the third and fourth LED light source units 350 and 360 are disposed in such a manner as to flank the light conducting member 410 from the right and left sides in Figure 21, and are fixed to the inside of the frame member 320.

A reflective sheet 370 is provided on the back surface side of the second light conducting member 410 (on the lower side in Figure 22), while a protective plate 321 formed from an optically transmissive resin is provided on the opening 310 side of the first light conducting member 400 (on the upper side in Figure 22).

The reflective sheet 370 serves to efficiently reflect the light of the first, second, third, and fourth LED light source units 330, 340, 350, and 360 toward the opening 310 side, but the surface light emitting apparatus 5 need not necessarily be provided with such a reflective sheet. Further, in order to control the light emerging from the light-emitting surface, a diffusing sheet or a prism sheet may be provided on the surface of the protective sheet 321.

In the example of Figure 21, the LED light source units are mounted along the top and bottom sides of the first light conducting member 400, but if the light intensity is sufficient, the LED light source may be mounted only on one side. Likewise, the LED light source units are mounted on the right and left sides of the second light conducting member 410, but if the light intensity is sufficient, the LED light source may be mounted only on one side.

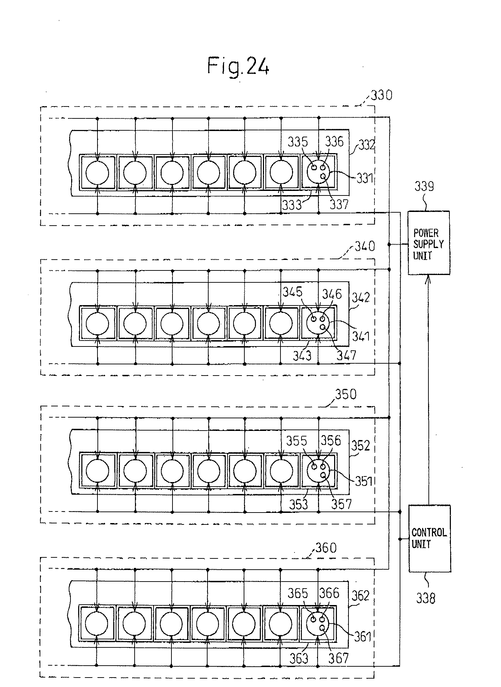

Figure 24 is a diagram schematically showing the LED light source unit.

The first LED light source unit 330 comprises a plurality of LEDs 331, a circuit substrate 332, reflectors 333, and an LED driving electronic component 334 (see Figure 22). The plurality of LEDs 331 are arranged at equally spaced intervals on the circuit substrate 332, and each individual LED is covered with its dedicated reflector 333. The interior of each reflector 333 is aluminum-deposited, and the reflector 333 thus functions to efficiently couple the light from the LED 331 into the corresponding light conducting rod 401. Preferably, the interior of the reflector 333 is mirror-finished or is coated with a white paint.

Each LED 331 is an LED of the type that contains a red LED element 335, a green LED element 336, and a blue LED element 337 in a single package, and can emit light of any desired color by mixing colored lights from the respective LED elements. Alternatively, each LED 331 may be constructed from a single-color LED, for example, a red LED, a green LED, a blue LED, or a white LED.

The second, third, and fourth LED light source units 340, 350, and 360 are each identical in configuration to the first LED light source unit 330 described above.

The LEDs 331 of the first LED light source unit 330, the LEDs 341 of the second LED light source unit 340, the LEDs 351 of the third LED light source unit 350, and the LEDs 361 of the fourth LED light source unit 360 each emit light of specified color by being driven by a current supplied from a power supply unit 339 in accordance with the control timing and the color specified by a control unit 338. The control unit 338 and/or the power supply unit 339 are suitably located inside or outside the frame member 320.

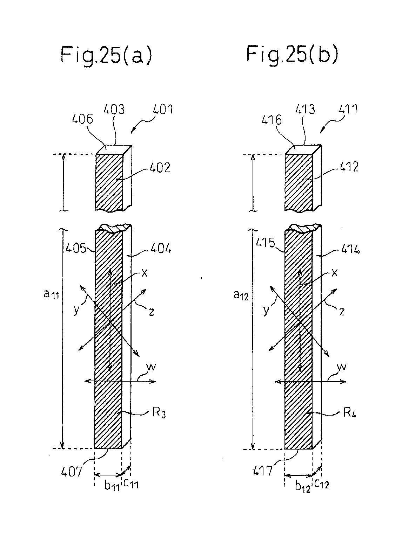

Figure 25 is a diagram showing one example of the light conducting rod as the basic building block of the light conducting member. Figure 25(a) shows one example of the light conducting rod 401 of the light conducting member 400, and Figure 25(b) shows one example of the light conducting rod 411 of the light conducting member 410.

As shown in Figure 25(a), the light conducting rod 401, which measures 450 mm in length (a₁₁), 12 mm in horizontal width (b₁₁), and 5 mm in vertical width (or height) (c₁₁), is formed from a PC resin resistant to breakage.

The light conducting rod 401 has a light-emitting face 402, a rear face 403 on the side opposite to the light-emitting face 402, side faces 404 and 405 extending adjacent to the light-emitting face 402, and end faces 406 and 407 each making an angle of approximately 90 degrees relative to the light-emitting face 402 so as to transmit therethrough the light emitted from the corresponding LED light source unit. A light deflecting means (R₃) for causing the light emitted from the first LED light source unit 330 and/or the second LED light source unit 340 and introduced through the end face 406 and/or the end face 407 to emerge from the light-emitting face 402 is formed on the light-emitting face 402 of the light conducting rod 401.

The rear face 403 and side faces 404 and 405 of the light conducting rod 401 are polished to a smooth and clear finish so that the light introduced into the light conducting rod 401 will be totally reflected by these faces and will not leak out through them. Instead of polishing to a smooth and clear finish, the rear face 403 and side faces 404 and 405 of the light conducting rod 401 may each be provided with a low refractive index layer or a reflective layer. Further, in order to effectively reflect the light toward the light-emitting face 402, the rear face 403 may be mirror-finished or be coated with a high refractive index paint or a high reflectivity paint, or may be provided with a light deflecting means similarly to the light-emitting face 402. The end faces 406 and 407 of the light conducting rod 401 are finished smooth so that the light emitted from the first and second LED light source units 330 and 340 can be readily introduced into the interior of the light conducting rod 401.

As shown in Figure 25(b), the light conducting rod 411, which measures 450 mm in length (a₁₂), 12 mm in horizontal width (b₁₂), and 5 mm in vertical width (or height) (c₁₂), is formed from a PC resin resistant to breakage. The light conducting rod 411 of the second light conducting member 410 has a light-emitting face 412, a rear face 413, side faces 414 and 415, and end faces 416 and 417, and a light deflecting means (R₄) is formed on the light-emitting face 412. The second light conducting rod 411 is formed from the same material and in the same size as the first light conducting rod 401, but the light conducting rods 401 and 411 may be formed from different materials or in different sizes.

The material of the light conducting rods 401 and 411, the details of the light deflecting means (R₃) and the light deflecting means (R₄), the surface roughening method for forming the light deflecting means, the diffusing material added in the light conducting rods 401 and 411 to form the light deflecting means, etc. are the same as those described in connection with the light conducting rod 11, and will not be described further herein.

The light deflecting means (R₃) and the light deflecting means (R₄) may be formed in the same manner or differently within a desirable range.

Each reflector 333 of the first LED light source unit 330 is formed so that its size exactly matches the size of one end face 406 or 407 of each light conducting rod 401, and one reflector 333 is provided for each light conducting rod 401. That is, one LED 331 is provided for each light conducting rod 401.

Preferably, the LEDs 331 are arranged with their light emission centers aligned parallel to the longitudinal direction of the respective light conducting rods 401, and more preferably, the LEDs 331 are arranged so that their light emission centers coincide with the longitudinal center lines of the respective light conducting rods 401.

The relationship between the light conducting rod and the reflector is the same for the second, third, and fourth LED light source units 340, 350, and 360 as that for the first LED light source unit 330.

Next, a description will be given of how the light is emitted from the surface light emitting apparatus 5.

The light emitted from each LED 331 of the first LED light source unit 330 is introduced into the corresponding light conducting rod 401 of the first light conducting member 400 through one end face 406 or 407 thereof. The light introduced into the light conducting rod 401 propagates toward the LED 341 at the opposite end (for example, see light ray L₅ in Figure 22) while being reflected at the rear face 403 and side faces 404 and 405 of the light conducting rod 401. However, since the light deflecting means (R₃) formed by surface roughening is provided on the light-emitting face 402 of the light conducting rod 401, the light introduced into the light conducting rod 401 strikes the light deflecting means where the light is scattered (for example, see point P₅ in Figure 22). Some of the scattered light emerges from the light-emitting face 402. Some of the scattered light is scattered back into the light conducting rod 401, but such light is again reflected at the rear face 403, side faces 404 and 405, reflective sheet 370, etc. of the light conducting rod 401, and is eventually scattered at the light-emitting face 402 and emerges outside the light conducting rod 401. The above description also applies to the light emitted from each LED 341 of the second LED light source unit 340.

The light emitted from each LED 361 of the fourth LED light source unit 360 is introduced into the corresponding light conducting rod 411 of the second light conducting member 410 through one end face 416 or 417 thereof. The light introduced into the light conducting rod 411 propagates toward the LED 351 at the opposite end while being reflected at the rear face 413 and side faces 414 and 415 of the light conducting rod 411. However, since the light deflecting means (R₄) formed by surface roughening is provided on the light-emitting face 412 of the light conducting rod 411, the light introduced into the light conducting rod 411 strikes the light deflecting means where the light is scattered. Some of the scattered light emerges from the light-emitting face 412. Some of the scattered light is scattered back into the light conducting rod 411, but such light is again reflected at the rear face 413, side faces 414 and 415, reflective sheet 370, etc. of the light conducting rod 411, and is eventually scattered at the reflecting face 412 and emerges outside the light conducting rod 411. The above description also applies to the light emitted from each LED 35 of the third LED light source unit 350.

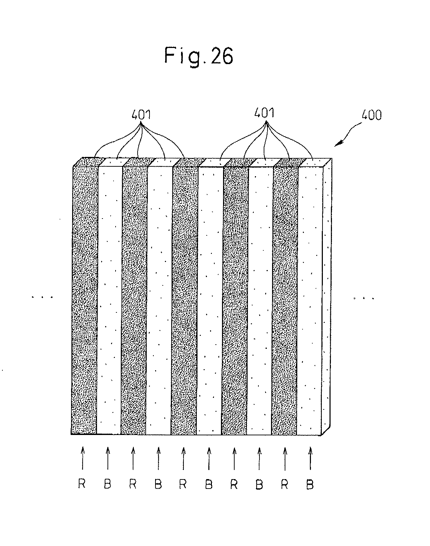

Figure 26 is a diagram for explaining how a color pattern can be produced by the first light conducting member 400.

As earlier described, since the rear faces 403 and side faces 404 and 405 of the light conducting rods 401 are all polished to a smooth and clear finish, the light introduced into each particular light conducting rod 401 propagates substantially only through that particular light conducting rod 401 and emerges only from the light-emitting face 402 of that particular light conducting rod 401, and the light does not diffuse into other light conducting rods 401 adjacent to it.

Accordingly, when the LEDs 331 corresponding to the respective light conducting rods 401 emit red and blue colored lights one alternating with the other, as shown in Figure 26, the light-emitting faces 402 of the light conducting rods 401 illuminate in red and blue in alternating fashion. In this way, a stripe pattern can be displayed on the light conducting member 400 under the control of the control unit 338.

Since the light conducting member 400 emits light from the roughened resin surfaces of the light conducting rods 401, the surface light emitting apparatus can emit light of pale, soft, and ecologic color as if the light were being emitted, for example, from within ice.

The phenomenon shown in Figure 26 also applies to the second light conducting member 410. Accordingly, a stripe pattern can also be displayed on the second light conducting member 410 under the control of the control unit 338.

As earlier described, the surface light emitting apparatus 5 is constructed to emit light by superimposing the light emerging from the first light conducting member 400 onto the light emerging from the second light conducting member 410. Furthermore, the light conducting rods 401 forming the first light conducting member 400 and the light conducting rods 411 forming the second light conducting member 410 are arranged so as to extend at right angles to each other; therefore, by suitably controlling the first and second LED light source units 330 and 340 and the third and fourth LED light source units 350 and 360 through the control unit 338, a checkerboard pattern can be displayed.

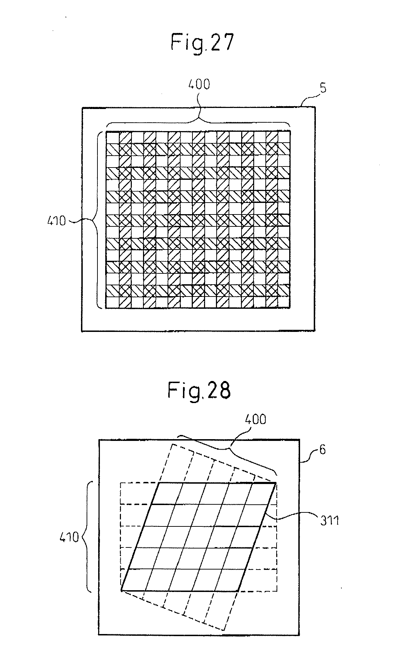

Figure 27 shows one example of a checkerboard pattern displayed on the surface light emitting apparatus 5.

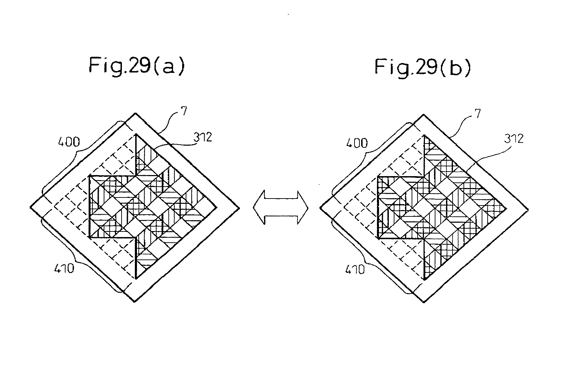

By causing every other light conducting rod 401 of the first light conducting member 400 to illuminate in a given color and every other light conducting rod 411 of the second light conducting member 410 to also illuminate in a given color, a checkerboard pattern such as shown in Figure 29 can be displayed.

Figure 28 is a diagram showing another surface light emitting apparatus 6.

The surface light emitting apparatus 6 shown in Figure 28 has a diamond-shaped opening 311, and the first and second light conducting members 400 and 410 are arranged one on top of the other by orienting them at about 60 degrees, not at 90 degrees, relative to each other. In this way, the first and second light conducting members 400 and 410 can be arranged at arbitrary angles to each other.

Figure 29 is a diagram showing still another surface light emitting apparatus 7.

The surface light emitting apparatus 7 shown in Figure 29 has an arrowhead-shaped opening 312, the first and second light conducting members 400 and 410 are arranged one on top of the other by orienting them at about 90 degrees. A desired checkerboard pattern is displayed by causing every other light conducting rod 401 of the first light conducting member 400 to illuminate in a given color and every other light conducting rod 411 of the second light conducting member 410 to also illuminate in a given color. Furthermore, by causing the display state to alternate between that shown in Figure 29(a) and that shown in Figure 29(b), a display can be produced that gives an impression as if the checkerboard pattern is moving in the direction indicated by the arrowhead of the opening. Therefore, the surface light emitting apparatus 7 shown in Figure 29 can be used as a guide light plate.

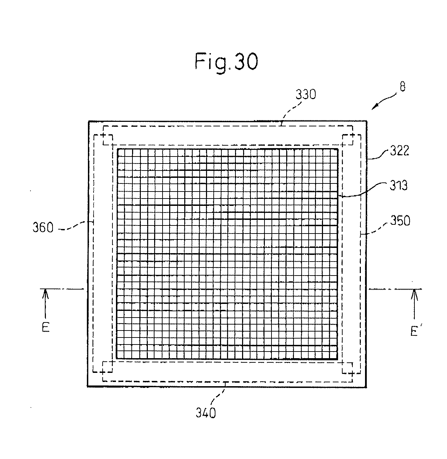

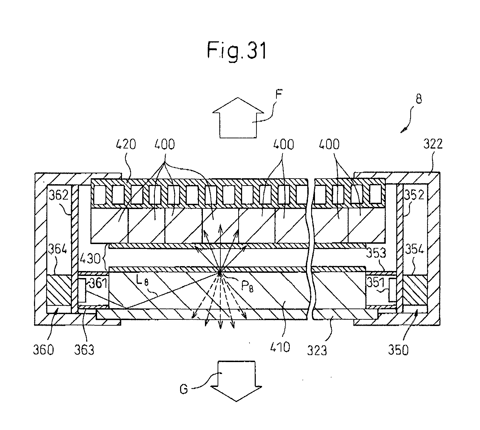

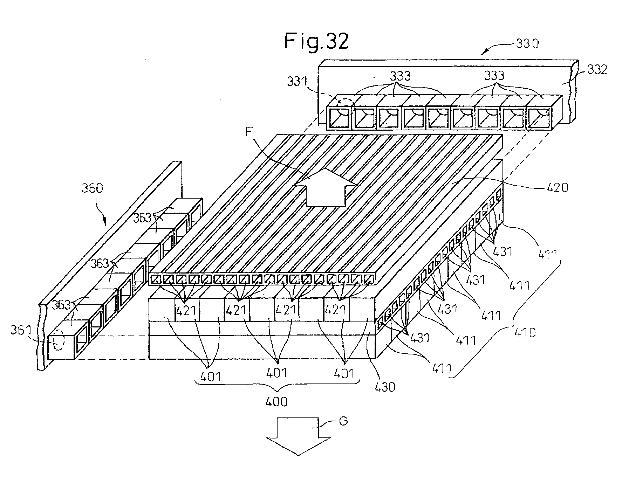

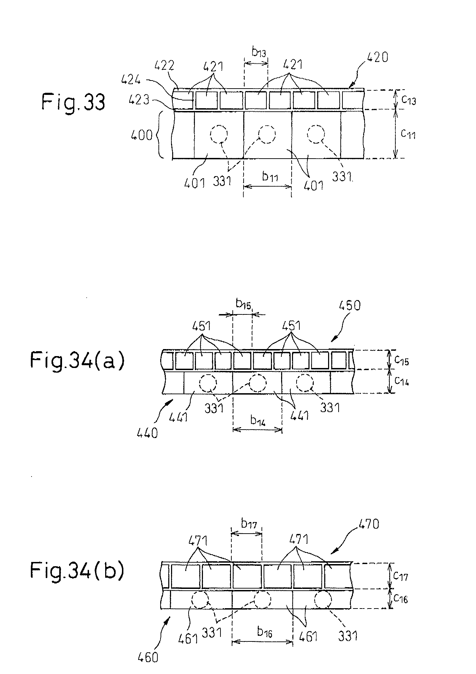

Figure 30 is a front view of another panel-type surface light emitting apparatus 8 as viewed from one light-emitting side thereof when the surface light emitting apparatus according to the present invention is constructed as a double-sided light-emitting panel. Figure 31 is a cross-sectional view taken along line EE' in Figure 30. Further, Figure 32 is a perspective view showing the relationship between a first light conducting member 400, a first hollow multi-cell structure 420, a second light conducting member 410, a second hollow multi-cell structure 430, a first LED light source unit 330, and a fourth LED light source unit 360. Figure 33 is a diagram showing the relationship between the first light conducting member 400 and the first hollow multi-cell structure 420. In Figures 31 and 32, light emerges from both surfaces as indicated by arrows F and G.

As shown in Figures 30 to 33, the surface light emitting apparatus 8 comprises: the first light conducting member 400 constructed from a plurality of light conducting rods 401; the first hollow multi-cell structure 420 constructed from a plurality of cells 421; the second light conducting member 410 constructed from a plurality of light conducting rods 411; the second hollow multi-cell structure 430 constructed from a plurality of cells 431; a frame member 322 having an opening 318; the first LED light source unit 330; the second LED light source unit 340; the third LED light source unit 350; and the fourth LED light source unit 360.

As shown in Figure 31, the surface light emitting apparatus 8 is constructed by stacking the second light conducting member 410, the second hollow multi-cell structure 430, the first light conducting member 400, and the first hollow multi-cell structure 420 one on top of another in this order from the bottom to the top of the figure. The plurality of light conducting rods 401 forming the first light conducting member 400 are arranged so as to extend at substantially right angles to the plurality of light conducting rods 411 forming the second light conducting member 410, while the plurality of cells 421 forming the first hollow multi-cell structure 420 are arranged so as to extend at substantially right angles to the plurality of cells 431 forming the second hollow multi-cell structure 430.

The first and second LED light source units 330 and 340 shown in Figure 32 are disposed in such a manner as to flank the first light conducting member 400 from the top and bottom in Figure 30, and are fixed to the inside of the frame member 322. On the other hand, the third and fourth LED light source units 350 and 360 are disposed in such a manner as to flank the second light conducting member 410 from the right and left sides in Figure 30, and are fixed to the inside of the frame member 322.

A protective plate 323 formed from an optically transmissive resin is provided on the back surface side of the second light conducting member 410 (on the lower side in Figure 31).

Further, to control the light emerging from the light-emitting surface, a diffusing sheet or a prism sheet may be provided on the surface of the first hollow multi-cell structure 420 and/or on the surface of a protective sheet 422.

In the example of Figure 30, the LED light source units are mounted along the top and bottom sides of the first light conducting member 400, but if the light intensity is sufficient, the LED light source may be mounted only on one side. Likewise, the LED light source units are mounted on the right and left sides of the second light conducting member 410, but if the light intensity is sufficient, the LED light source may be mounted only on one side.

The first to fourth LED light source units 330, 340, 350, and 360 used in the surface light emitting apparatus 8 shown in Figures 30 to 32 are the same as those used in the earlier described surface light emitting apparatus 1, and therefore, the description thereof will not be repeated herein. Further, the first and second light conducting members 400 and 410 used in the surface light emitting apparatus 8 are the same as those used in the earlier described surface light emitting apparatus 5, and therefore, the description thereof will not be repeated herein.

As shown in Figure 33, the first hollow multi-cell structure 420 comprises a top plate 422, a bottom plate 423, and a plurality of ribs 424, forming the plurality of cells 421 extending parallel to the plurality of light conducting rods 401 that form the first light conducting member 400. Each cell 421 measures 450 mm in length (a₁₃), 5 mm in horizontal width (b₁₃), and 5 mm in vertical width (or height) (c₁₃), the length being the same as the length of the light conducting rod 401 and the horizontal and vertical widths being half of the respective widths of the light conducting rod 401. The top plate 422, the bottom plate 423, and the ribs 424 are all formed from a 0.33-mm thick transparent polycarbonate resin. Here, the first hollow multi-cell structure 420 may be formed from a PMMA resin, an MS resin, a PC resin, a polyester resin such as PET, a PSt resin, a COP resin, a COC resin, an olefin resin such as a PP resin or a FE resin, a PVC resin, an ionomer resin, glass, etc.

The light conducting member 400 and the hollow multi-cell structure 420 are arranged so that two hollow cells 421 correspond to one light conducting rod 401. Here, the light conducting member 400 and the hollow multi-cell structure 420 may be bonded together by an optical adhesive by arranging them so that two hollow cells 421 correspond to one light conducting rod 401.

Figure 33 has shown the relationship between the first light conducting member 400 and the first hollow multi-cell structure 420, but the relationship between the second light conducting member 410 and the second hollow multi-cell structure 430 is also the same as that shown in Figure 33.

Next, a description will be given of how the light is emitted from the surface light emitting apparatus 8.

First, the light emitted from each LED 331 of the first LED light source unit 330 is introduced into the corresponding light conducting rod 401 through one end face 406 or 407 thereof. The light introduced into the light conducting rod 401 propagates toward the LED 341 at the opposite end while being reflected at the rear face 403 and side faces 404 and 405 of the light conducting rod 401. However, since the light deflecting means (R₃) formed by surface roughening is provided on the light-emitting face 402 of the light conducting rod 401, the light introduced into the light conducting rod 401 strikes the light deflecting means where the light is scattered. Some of the scattered light emerges from the light-emitting face 402. Some of the scattered light is scattered back into the light conducting rod 401, but such light is again reflected at the rear face 403, side faces 404 and 405, etc. of the light conducting rod 401, and is eventually scattered at the light deflecting means formed on the light-emitting face 402 and emerges outside the light conducting rod 401.

Next, the light emerging from the light-emitting face 402 enters the first hollow multi-cell structure 420. The light that entered the hollow multi-cell structure 420 is transmitted through the first hollow multi-cell structure 420 while being scattered and diffused by the bottom plate 423, the plurality of ribs 424, and the top plate 422, and emerges outside the surface light emitting apparatus 8 (see light indicated by arrow F).

As earlier described, since the rear face 403 and side faces 404 and 405 of the light conducting rod 401 are all polished to a smooth and clear finish, the light introduced into the light conducting rod 401 either propagates substantially only through the light conducting rod 401 or emerges from the light-emitting face 402 of the light conducting rod 401, and does not diffuse into other light conducting rods 401 adjacent to it. However, since the light emerging from each light conducting rod 401 passes through the first hollow multi-cell structure 420 before emerging outside the surface light emitting apparatus 8, the light is scattered and diffused by the bottom plate 423, the plurality of ribs 424, and the top plate 422 of the first hollow multi-cell structure 420, and thus, the lights emitted from the adjacent light conducting rods 401 are mixed together between the adjacent light conducting rods 401.

On the other hand, the light emitted from each LED 361 of the fourth LED light source unit 360 is introduced into the corresponding light conducting rod 411 through one end face 416 or 417 thereof. The light introduced into the light conducting rod 411 propagates toward the LED 351 at the opposite end (for example, see light ray L₈ in Figure 31) while being reflected at the rear face 413 and side faces 414 and 415 of the light conducting rod 411. However, since the light deflecting means (R₄) formed by surface roughening is provided on the light-emitting face 412 of the light conducting rod 411, the light introduced into the light conducting rod 411 strikes the light deflecting means where the light is scattered (for example, see point P₈ in Figure 31). Some of the scattered light emerges from the light-emitting face 412. At the same time, a certain amount of light emerges from the rear face 413 (see light indicated by arrow G). Some of the scattered light is scattered back into the light conducting rod 411, but such light is again reflected at the rear face 413, side faces 414 and 415, etc. of the light conducting rod 411, and is eventually scattered at the light-emitting face 412 and emerges outside the light conducting rod 411.

A portion of the light emerging from the light-emitting face 412 enters the second hollow multi-cell structure 430. The light that entered the second hollow multi-cell structure 430 is transmitted through the second hollow multi-cell structure 430 while being scattered and diffused by the bottom plate, the plurality of ribs, and the top plate, and emerges outside the surface light emitting apparatus 8 through the first light conducting member 400 and the first hollow multi-cell structure 420.

As earlier described, since the rear face 413 and side faces 414 and 415 of the light conducting rod 411 are all polished to a smooth and clear finish, the light introduced into the light conducting rod 411 either propagates substantially only through the light conducting rod 411 or emerges from the light-emitting face 412 of the light conducting rod 411, and does not diffuse into other light conducting rods 411 adjacent to it. However, since the light emerging from each light conducting rod 411 passes through the second hollow multi-cell structure 430 before emerging outside it, the light is scattered and diffused by the bottom plate, the plurality of ribs, and the top plate of the second hollow multi-cell structure 430, and thus, the lights emitted from the adjacent light conducting rods 411 are mixed together between the adjacent light conducting rods 411.

Here, the surface light emitting apparatus 8 is constructed to emit light by superimposing the light emerging from the first light conducting member 400 onto the light emerging from the second light conducting member 410. Furthermore, the light conducting rods 401 forming the first light conducting member 400 and the light conducting rods 411 forming the second light conducting member 410 are arranged so as to extend at right angles to each other. Accordingly, by suitably controlling the first and second LED light source units 330 and 340 and the third and fourth LED light source units 350 and 360 through the control unit 338, the surface light emitting apparatus 8 can display a checkerboard pattern, as in the case of the earlier described surface light emitting apparatus 5.

In the surface light emitting apparatus 8, the lights emerging from the light conducting members 400 and 410 are introduced into the first and second hollow multi-cell structures 420 and 430, respectively. The light introduced into each of the first and second hollow multi-cell structures 420 and 430 is scattered and diffused by the bottom plate, the plurality of ribs, and the top plate of the hollow multi-cell structure; as a result, the lights emitted from adjacent light conducting rods are mixed together between the adjacent light conducting rods. Since the light conducting members 400 and 410 emit light from the roughened resin surfaces of the light conducting rods, the surface light emitting apparatus 8 can emit light of pale, soft, and ecologic color as if the light were being emitted, for example, from within ice. Furthermore, since the surface light emitting apparatus 8 is constructed so as to cause light emitted from the light conducting members 400 and 410 to emerge through the first and second hollow multi-cell structures 420 and 430, respectively, the apparatus can emit softer light.

Figure 34 is a diagram for explaining an alternative relationship between the light conducting member and the hollow multi-cell structure.

Figure 34(a) shows an example in which an alternative light conducting member 440 and an alternative hollow multi-cell structure 450 are arranged instead of the first light conducting member 400 and the first hollow multi-cell structure 420 described with reference to Figure 33 and/or the second light conducting member 410 and the second hollow multi-cell structure 430; the structure shown here can be employed for the construction of the surface light emitting apparatus 8. The materials used for the light conducting member 440 and the hollow multi-cell structure 450 and the formation of the light-emitting faces are the same as those for the first light conducting member 400 and the first hollow multi-cell structure 420 described above. Each of the light conducting rods 441 forming the light conducting member 440 measures 10 mm in horizontal width (b₁₄) and 5 mm in vertical width (or height) (c₁₄), and each light conducting rod 441 has a light-emitting face on the side thereof facing the hollow multi-cell structure 450. Each hollow cell 451 measures 4 mm in horizontal width (b₁₅) and 4 mm in vertical width (or height) (c₁₅). The positional relationship of the light conducting rods 441 relative to the hollow cells 451 is not considered in this arrangement.

Figure 34(b) shows an example in which a further alternative light conducting member 460 and a further alternative hollow multi-cell structure 470 are arranged instead of the first light conducting member 400 and the first hollow multi-cell structure 420 and/or the second light conducting member 410 and the second hollow multi-cell structure 430 described above; the structure shown here can be employed for the construction of the surface light emitting apparatus 8. The materials used for the light conducting member 460 and the hollow multi-cell structure 470 and the formation of the light-emitting faces are the same as those for the first light conducting member 400 and the first hollow multi-cell structure 420 described above. Each of the light conducting rods 461 forming the light conducting member 460 measures 12 mm in horizontal width (b₁₆) and 4 mm in vertical width (or height) (c₁₆), and each light conducting rod 461 has a light-emitting face on the side thereof facing the hollow multi-cell structure 470. Each hollow cell 471 measures 6 mm in horizontal width (b₁₇) and 6 mm in vertical width (or height) (c₁₇). Two hollow cells 471 are arranged for each conducting rod 461.

In Figures 34(a) and 34(b), the mounting position of each LED 331 is shown by dotted lines.

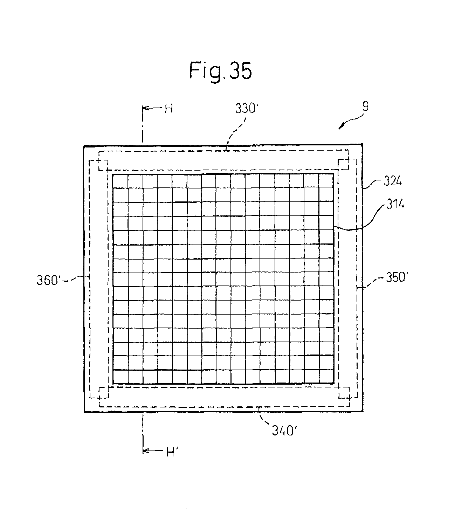

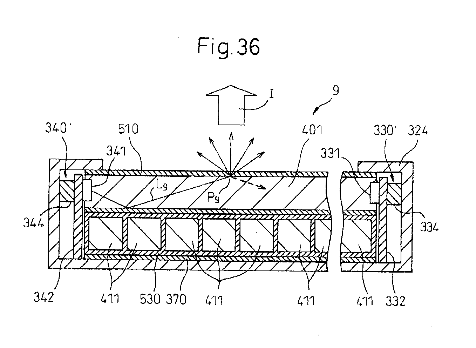

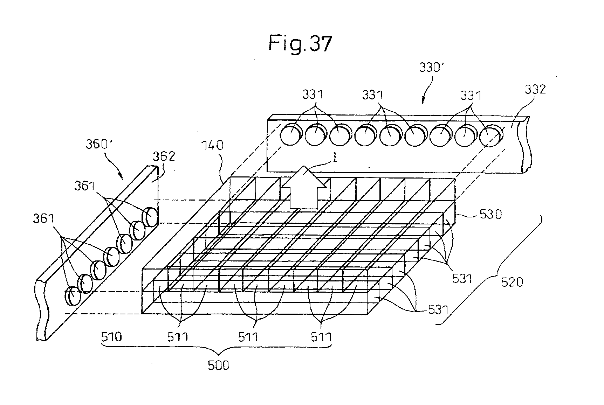

Figure 35 is a front view of still another panel-type surface light emitting apparatus 9 constructed as a surface light emitting apparatus according to the present invention, as viewed from the light-emitting side thereof. Figure 36 is a cross-sectional view taken along line HH' in Figure 35. Further, Figure 37 is a perspective view showing the relationship between a first hollow multi-cell structure 510, a second hollow multi-cell structure 530, a first LED light source unit 330', and a fourth LED light source unit 360'. In Figure 37, the light conducting rods inserted in the cells of each hollow multi-cell structure are not shown. In Figures 36 and 37, light emerges in the direction indicated by arrow I.

As shown in Figures 35 to 37, the surface light emitting apparatus 9 comprises: a first light conducting member 500 constructed from a plurality of light conducting rods 401 inserted in the hollow cells 511 of the first hollow multi-cell structure 510; a second light conducting member 520 constructed from a plurality of light conducting rods 411 inserted in the hollow cells 531 of the second hollow multi-cell structure 530; a frame member 324 having an opening 314; the first LED light source unit 330'; the second LED light source unit 340'; the third LED light source unit 350'; and the fourth LED light source unit 360'.

As shown in Figure 36, the surface light emitting apparatus 9 is constructed by stacking the first light conducting member 500 on top of the second light conducting member 520. Further, the plurality of light conducting rods 401 contained in the first light conducting member 500 are arranged so as to extend at substantially right angles to the plurality of light conducting rods 411 contained in the second light conducting member 520.

The first and second LED light source units 330' and 340' are disposed in such a manner as to flank the first light conducting member 500 from the top and bottom in Figure 35, and are fixed to the inside of the frame member 324. On the other hand, the third and fourth LED light source units 350' and 360' are disposed in such a manner as to flank the second light conducting member 520 from the right and left sides in Figure 35, and are fixed to the inside of the frame member 324.

A reflective plate 370 is provided on the back surface side of the second light conducting member 520 (on the lower side in Figure 36). Further, to control the light emerging from the light-emitting surface, a diffusing sheet or a prism sheet may be provided on the surface of the first light conducting member 500.

In the example of Figure 35, the LED light source units are mounted along the top and bottom sides of the first light conducting member 500, but if the light intensity is sufficient, the LED light source may be mounted only on one side. Likewise, the LED light source units are mounted on the right and left sides of the second light conducting member 520, but if the light intensity is sufficient, the LED light source may be mounted only on one side.

The first to fourth LED light source units 330', 340', 350', and 360' used in the surface light emitting apparatus 9 only differ from those used in the earlier described surface light emitting apparatus 5 by the omission of the reflectors, and therefore, will not be described further herein. Similarly, the first and second light conducting rods 401 and 411 used in the surface light emitting apparatus 9 are the same as those described in connection with the surface light emitting apparatus 5, and therefore, will not be described further herein.

In the surface light emitting apparatus 9, the first light conducting rods 401 are inserted in the plurality of hollow cells 511 of the first hollow multi-cell structure 510, while the second light conducting rods 411 are inserted in the plurality of hollow cells 531 of the second hollow multi-cell structure 530. The LEDs of the first to fourth LED light source units 330', 340', 350', and 360' are inserted in the respective hollow cells. The first and second hollow multi-cell structures 510 and 530 each comprise a top plate, a bottom plate, and a plurality of ribs; the top plate, the bottom plate, and the ribs are all formed from a 0.33-mm thick transparent polycarbonate resin. The first and second hollow multi-cell structures 510 and 530 may be formed from a PMMA resin, an MS resin, a PC resin, a polyester resin such as PET, a PSt resin, a COP resin, a COC resin, an olefin resin such as a PP resin or a PE resin, a PVC resin, an ionomer resin, glass, etc.

Next, a description will be given of how the light is emitted from the surface light emitting apparatus 9.

First, the light emitted from each LED 331 of the first LED light source unit 330' is introduced into the corresponding light conducting rod 401 through one end face 406 or 407 thereof. The light introduced into the light conducting rod 401 propagates toward the LED 341 at the opposite end (for example, see light ray L₉ in Figure 36) while being reflected at the rear face 403 and side faces 404 and 405 of the light conducting rod 401. However, since the light deflecting means (R₃) formed by surface roughening is provided on the light-emitting face 402 of the light conducting rod 401, the light introduced into the light conducting rod 401 strikes the light deflecting means where the light is scattered (for example, see point P₉ in Figure 36). Some of the scattered light emerges from the light-emitting face 402. Some of the scattered light is scattered back into the light conducting rod 401, but such light is again reflected at the rear face 403, side faces 404 and 405, etc. of the light conducting rod 401, and is eventually scattered at the light deflecting means (R₃) and emerges outside the light conducting rod 401. Next, the light emerging from the light-emitting face 402 passes through the first hollow multi-cell structure 510, and emerges outside the surface light emitting apparatus 9 (see light indicated by arrow 1).

On the other hand, the light emitted from each LED 361 of the fourth LED light source unit 360' is introduced into the corresponding light conducting rod 411 through one end face 416 or 417 thereof. The light introduced into the light conducting rod 411 propagates toward the LED 351 at the opposite end while being reflected at the rear face 413 and side faces 414 and 415 of the light conducting rod 411. However, since the light deflecting means (R₄) formed by surface roughening is provided on the light-emitting face 412 of the light conducting rod 411, the light introduced into the light conducting rod 411 strikes the light deflecting means where the light is scattered. Some of the scattered light emerges from the light-emitting face 412. At the same time, a certain amount of light emerges from the rear face 413 (see light indicated by arrow I). Some of the scattered light is scattered back into the light conducting rod 411, but such light is again reflected at the rear face 413, side faces 414 and 415, etc. of the light conducting rod 411, and is eventually scattered at the light deflecting means (R₄) and emerges outside the light conducting rod 411.

Here, the surface light emitting apparatus 9 is constructed to emit light by superimposing the light emerging from the first light conducting member 500 onto the light emerging from the second light conducting member 520. Furthermore, the light conducting rods 411 forming the first light conducting member 500 and the light conducting rods 411 forming the second light conducting member 520 are arranged so as to extend at right angles to each other. Accordingly, by suitably controlling the first and second LED light source units 330' and 340' and the third and fourth LED light source units 350' and 360' through the control unit 338, the surface light emitting apparatus 9 can display a checkerboard pattern, as in the case of the earlier described surface light emitting apparatus 5.

As described above, in the surface light emitting apparatus 9 also, since the first and second light conducting members 500 and 520 emit light from the roughened resin surfaces of the light conducting rods, the apparatus can emit light of pale, soft, and ecologic color as if the light were being emitted, for example, from within ice.

In this way, since the surface light emitting apparatus 5 to 9 according to the present invention are constructed to emit light by causing the light emerging from the roughened resin surfaces of the light conducting rods to further pass through the hollow multi-cell structure, the apparatus can emit light of pale, soft, blurred, and ecologic color.

While the surface light emitting apparatus 1 to 9 of the present invention have been described above by dealing with examples in which the invention is applied to a panel-type apparatus, it will be recognized that the surface light emitting apparatus of the invention can be adapted for use in many applications other than the panel-type, for example, as an indoor or outdoor illumination apparatus, furniture, etc., by taking advantage of its lightweight and simple construction.

## Claims

1. A surface light emitting apparatus comprising:
a light conducting member constructed from a plurality of light conducting rods and having an end face and a light-emitting face;
a light source for emitting light into said light conducting member through said end face; and
light deflecting means for causing the light introduced through said end face of said light conducting member to emerge from said light-emitting face of said light conducting member.

2. The surface light emitting apparatus according to claim 1, wherein said light deflecting means is formed by surface roughening of said light conducting rods which are formed from a resin.

3. The surface light emitting apparatus according to claim 1, wherein said light deflecting means is a random projection/depression pattern formed on said light-emitting face of each of said light conducting rods.

4. The surface light emitting apparatus according to claim 1, wherein said light deflecting means is a screen-printed pattern, a dot pattern, or a pattern of V-shaped or U-shaped grooves formed on said light-emitting face of each of said light conducting rods.

5. The surface light emitting apparatus according to claim 1, wherein said light deflecting means is formed by adding a diffusing material in said light conducting rods.

6. The surface light emitting apparatus according to claim 1, wherein said light source includes a plurality of LEDs which are arranged one for each of said light conducting rods.

7. The surface light emitting apparatus according to claim 6, further comprising a plurality of reflectors for coupling said plurality of LEDs to said plurality of light conducting rods, respectively.

8. The surface light emitting apparatus according to claim 1, further comprising a control unit for controlling said light source so as to display a stripe pattern on said light conducting member.

9. The surface light emitting apparatus according to claim 1, further comprising a hollow multi-cell structure constructed from a plurality of hollow cells for allowing the light emerging from said light-emitting face of said light conducting member to pass therethrough.

10. The surface light emitting apparatus according to claim 9, wherein said light conducting member and said hollow multi-cell structure are formed in an integral fashion.

11. The surface light emitting apparatus according to claim 1, further comprising:
a second light conducting member constructed from a plurality of light conducting rods and having a second end face and a second light-emitting face;
a second light source for emitting light into said second light conducting member through said second end face; and
second light deflecting means for causing the light introduced through said second end face of said second light conducting member to emerge from said second light-emitting face of said second light conducting member, wherein
said light conducting member and said second light conducting member are arranged one on top of the other.

12. The surface light emitting apparatus according to claim 11, wherein the light conducting rods of said light conducting member are oriented so as to extend at substantially right angles to the light conducting rods of said second light conducting member.

13. The surface light emitting apparatus according to claim 11, further comprising:
a hollow multi-cell structure constructed from a plurality of hollow cells for allowing the light emerging from said light-emitting face of said light conducting member to pass therethrough; and
a second hollow multi-cell structure constructed from a plurality of hollow cells for allowing the light emerging from said second light-emitting face of said second light conducting member to pass therethrough.

14. The surface light emitting apparatus according to claim 11, wherein said light deflecting means and said second light deflecting means are formed by surface roughening of said light conducting rods which are formed from a resin.

15. The surface light emitting apparatus according to claim 11, wherein said light deflecting means and said second light deflecting means are random projection/depression patterns formed on said light-emitting face and said second light-emitting face of said light conducting rods, respectively.

16. The surface light emitting apparatus according to claim 11, wherein said light deflecting means and said second light deflecting means are screen-printed patterns, dot patterns, or patterns of v-shaped or U-shaped grooves formed on said light-emitting face and said second light-emitting face of said light conducting rods, respectively.

17. The surface light emitting apparatus according to claim 11, wherein said light deflecting means and said second light deflecting means are formed by adding a diffusing material in said light conducting rods.

18. The surface light emitting apparatus according to claim 11, wherein said light source and said second light source each comprise a plurality of LEDs which are arranged one for each of said light conducting rods.

19. The surface light emitting apparatus according to claim 18, further comprising a plurality of reflectors for coupling said plurality of LEDs to said plurality of light conducting rods, respectively.

20. The surface light emitting apparatus according to claim 11, further comprising a control unit for controlling said light source so as to display a stripe pattern on said light conducting member and said second light source so as to display a stripe pattern on said second light conducting member, thereby displaying as a whole a checkerboard pattern on said surface light emitting apparatus.
